**Europäisches Patentamt**

**European Patent Office**

**Office européen des brevets**

(11) Numéro de publication : **0 402 236 B1**

(12) **FASCICULE DE BREVET EUROPEEN**

(45) Date de publication du fascicule du brevet :
**09.12.92 Bulletin 92/50**

(51) Int. Cl.⁵ : **B64C 27/32**

(21) Numéro de dépôt : **90401516.1**

(22) Date de dépôt : **05.06.90**

(54) **Dispositif de butées escamotables pour pales de rotors de giravions, et tête de rotor le comportant.**

(30) Priorité : **08.06.89 FR 8907618**

(43) Date de publication de la demande :
**12.12.90 Bulletin 90/50**

(45) Mention de la délivrance du brevet :
**09.12.92 Bulletin 92/50**

(84) Etats contractants désignés :
**DE GB IT**

(56) Documents cités :
**GB-A- 2 041 310**
**GB-A- 2 139 171**

(73) Titulaire : **AEROSPATIALE Société Nationale
Industrielle
37, Boulevard de Montmorency
F-75781 Paris Cédex 16 (FR)**

(72) Inventeur : **Anglade, Marc
24 Avenue Georges Bizet
F-13470 Carnoux (FR)**
Inventeur : **Guimbal, Bruno
Rue du Château Moustier
F-13220 Chateauneuf-les-Martigues (FR)**
Inventeur : **Hancart, Michel Aimé
23 Lotissement l'Escandihado
F-13320 Bouc-Bel-Air (FR)**

(74) Mandataire : **Phélip, Bruno et al
c/o Cabinet Harlé & Phélip 21, rue de La
Rochefoucauld
F-75009 Paris (FR)**

**Description**

La présente invention concerne les dispositifs de butées escamotables pour pales de rotor de giravions, et se rapporte plus précisément à un dispositif de butées mixtes, en battement et traînée, pour les pales de rotors principaux (ou sustentateurs) ou arrières (ou anti-couples) d'hélicoptères, sur lesquels chaque pale de rotor est reliée au moyeu du rotor correspondant par des moyens de retenue et d'articulation comprenant au moins une butée sphérique lamifiée.

L'invention a ainsi plus précisément pour objet un dispositif de butées en battement et/ou en traînée escamotables, destiné à équiper une tête de rotor d'hélicoptère du type comprenant un moyeu de rotor qui, d'une part, est solidaire d'un mât de rotor destiné à être entraîné en rotation autour de son axe, confondu avec l'axe de rotation du rotor et auquel, d'autre part, chacune des pales du rotor est reliée notamment par des moyens de retenue et d'articulation de cette pale sur le moyeu, ces moyens comprenant au moins deux armatures dont l'une, en position radiale externe par rapport à l'autre, est rigidement fixée sur le moyeu, tandis que l'autre armature, en position radiale interne, est solidaire en mouvement du pied de la pale, par l'intermédiaire d'une partie fourchue d'attache.

Cette partie fourchue d'attache peut être un prolongement du pied de la pale, radialement vers l'intérieur, c'est-à-dire vers le moyeu, ou encore un organe sensiblement radial de liaison, conformé en chape double, ou en manchon présentant une chape radiale à chacune de ses deux parties d'extrémités radiales. Ainsi, la chape d'extrémité radiale externe de la chape double ou du manchon de liaison peut recevoir et retenir le pied de pale, tandis que la chape d'extrémité radiale interne de cette chape double ou de ce manchon peut être liée à l'armature radiale interne des moyens de retenue et d'articulation.

Il est bien connu que les rotors principaux et arrières d'hélicoptères de type articulé doivent être équipés de dispositifs de butées de battement pour les pales de ces rotors, afin d'empêcher des débattements angulaires en battement trop importants de ces pales de part et d'autre de leur plan de rotation, à l'arrêt ou aux faibles vitesses de rotation du rotor, ceci afin d'empêcher tout endommagement des pales et/ou d'autres parties de l'hélicoptère que les pales pourraient venir heurter. Pour les rotors principaux par exemple, il est nécessaire de limiter le fléchissement vers le bas des pales de ces rotors, sous l'effet de leur poids propre, aux faibles vitesses de rotation et à l'arrêt des rotors, pour éviter qu'elles ne heurtent le fuselage ou même le sol, et il est également nécessaire de limiter leur débattement angulaire vers le haut, sous l'effet d'une rafale de vent, pour éviter toute rechute brutale de la pale pouvant l'endommager, ou endommager l'hélicoptère ou la butée basse prévue pour limiter le fléchissement vers le bas.

Un grand nombre de dispositifs différents de "butées basses" comme de "butées hautes" a déjà été proposé, ces dispositifs comprenant, pour chaque pale du rotor, une butée montée sur le pied de pale ou sur un organe de liaison de la pale au moyeu, et une butée montée sur le moyeu ou le mât rotor, et pouvant, éventuellement, être une butée commune à toutes les pales et réalisée sous la forme d'un anneau dit "réciproque". La plupart des réalisations connues de ces dispositifs de butées de battement sont du type comprenant, pour chaque pale, au moins une butée escamotable en vol sous l'effet de la force centrifuge. Dans ce cas, cette butée escamotable en vol présente une surface d'appui et est montée pivotante soit sur le moyeu, soit sur le pied de pale ou sur une pièce de liaison de la pale au moyeu, l'axe de pivotement étant soit parallèle soit perpendiculaire à l'axe de rotation du moyeu, et la butée porte une masselotte à l'extrémité d'un bras et est rappelée par un ressort en position de coopération avec l'autre butée du dispositif associé à la pale considérée, laquelle autre butée peut être soit un talon d'appui rigidement fixé respectivement sur le pied de pale ou ladite pièce de liaison de la pale au moyeu, ou sur le moyeu, soit elle-même escamotable sous l'effet de la force centrifuge, de sorte que si la vitesse de rotation du rotor est supérieure à un seuil prédéterminé, les effets de la force centrifuge s'exerçant sur la masselotte font tourner la butée à l'encontre du ressort de rappel, de sorte que sa surface d'appui ne puisse venir en contact contre l'autre butée, tandis que si la vitesse de rotation du rotor est inférieure au seuil, le ressort rappelle la butée en position permettant le contact de sa surface d'appui avec l'autre butée, en limitant ainsi les débattements de la pale correspondante, vers le bas et/ou vers le haut de son plan de rotation, selon que le dispositif de butées de battement est un dispositif à butées dites respectivement "basses" et "hautes".

En ce qui concerne les rotors arrières d'hélicoptères, leurs dispositifs de butées de battement limitent les mouvements angulaires de battement des pales d'un côté et de l'autre de leur plan de rotation et comprennent, le plus souvent, pour chaque pale du rotor, deux talons d'appui rigidement fixés sur le pied de la pale, respectivement en position axiale interne et en position axiale externe par rapport au pied de pale, tous les talons internes prenant appui contre un unique patin annulaire rigidement fixé en position axiale interne autour du moyeu ou du mât du rotor arrière, pour limiter les battements des pales axialement vers l'intérieur par rapport à leur plan de rotation, et tous les talons externes prenant appui contre un autre patin annulaire, rigidement fixé en position axiale externe sur le moyeu du rotor arrière, pour limiter les battements des pales axialement vers l'extérieur par rapport à leur plan de rotation.

Ces différentes réalisations de dispositifs de butées de battement conviennent à l'équipement de rotors articulés dont les moyeux sont de différents types, auxquels les pales sont reliées chacune par des moyens de retenue et d'articulation comprenant au moins une butée sphérique lamifiée ainsi que par une partie fourchue d'attache de la pale au moyeu.

Ces différents types de moyeux comprennent :
- les moyeux à un seul plateau radial supporté par le mât rotor et percé d'alvéoles en nombre égal aux pales, et dans chacun desquels sont logés au moins partiellement les moyens de retenue et d'articulation d'une pale correspondante sur le plateau de moyeu, tels que décrits dans le brevet français 2 427 251 de la demanderesse,
- les moyeux à deux plateaux radiaux superposés et supportés par le mât rotor, les deux plateaux étant espacés l'un de l'autre dans la direction de l'axe du rotor pour loger au moins partiellement entre eux les moyens de retenue et d'articulation de chaque pale aux deux plateaux du moyeu, tels que décrits dans le brevet français 2 456 034 de la demanderesse, et
- les moyeux à mât moyeu tubulaire intégré, dans lesquels le mât rotor et le moyeu sont constitués par une unique pièce tubulaire percée pour chaque pale du rotor d'une ou de deux ouvertures pour le passage de l'une ou des deux branches de la partie fourchue d'attache de la pale au moyeu, les moyens de retenue et d'articulation de chaque pale au moyeu étant au moins partiellement logés à l'intérieur d'une partie d'extrémité du mât moyeu tubulaire intégré, comme cela est décrit dans les brevets français 2 584 995 et 2 584 996 de la demanderesse.

Pour équiper des rotors comportant ces différents types de moyeux, et plus particulièrement lorsque le moyeu est réalisé sous la forme d'un mât moyeu tubulaire intégré, il a également été proposé dans le brevet français 2 584 997 de la demanderesse, un dispositif de butées de battement comprenant, pour chaque pale, au moins un organe de butée solidaire en mouvement du pied de la pale, et coopérant avec au moins un organe de butée solidaire du moyeu et/ou du mât, afin de limiter les battements de la pale d'un côté au moins du plan de rotation des pales, chaque organe de butée solidaire en mouvement du pied d'une pale étant porté par l'armature radiale interne des moyens de retenue et d'articulation de cette pale sur le moyeu, cet organe de butée étant de plus en saillie sensiblement radialement vers l'intérieur par rapport à cette armature radiale interne. L'organe de butée présenté par cette armature est conformé en becquet d'une seule pièce avec cette armature et délimitant axialement d'un côté une portée de glissement en forme de calotte sphérique convexe sur la face radiale interne de cette armature radiale interne, et le becquet présentant, en saillie vers l'extérieur de la portée de glissement convexe, une surface de butée tournée sensiblement vers l'intersection de l'axe de rotation du rotor et du plan de rotation des pales, l'organe de butée correspondant et solidaire du moyeu et/ou du mât présentant une surface d'appui sensiblement en regard de la surface de butée du becquet et délimitant axialement d'un côté une portée de glissement concave, de courbure complémentaire à celle de la portée de glissement convexe, de sorte que les deux portées puissent glisser l'une sur l'autre, lors des battement de la pale correspondante, jusqu'à la venue de la surface de butée du becquet contre la surface d'appui en regard délimitant la portée de glissement concave, afin de limiter les battements extrêmes autorisés pour la pale d'un côté au moins du plan de rotation des pales.

Dans une forme de réalisation préférée de ce brevet français, la portée de glissement convexe est formée sur le fond d'un évidement usiné dans la face radiale interne de l'armature radiale interne correspondante et axialement délimité entre deux becquets, et la portée de glissement concave qui coopère avec la portée de glissement convexe, est délimitée entre deux surfaces d'appui, de sorte que chacun des deux becquets vienne en contact par sa surface de butée contre l'une des deux surfaces d'appui, après glissement des deux portées l'une sur l'autre, lors des battements extrêmes autorisés pour la pale d'un côté correspondant du plan de rotation des pales. En outre, les portées de glissement concaves de toutes les pales du rotor peuvent être présentées par la surface latérale externe d'une unique butée de battement centrale, coaxiale au mât et au moyeu, cette unique butée de battement centrale étant un organe de révolution axiale à surface latérale externe concave délimité entre deux surfaces tronconiques convergent chacune axialement du côté opposé au centre de la butée de battement centrale et formant chacune l'une des surfaces d'appui coopérant avec les surfaces de butée de tous les becquets situés axialement d'un même côté correspondant du centre de la butée de battement centrale, qui est au moins partiellement logée à l'intérieur du mât moyeu tubulaire intégré.

Dans toutes les réalisations de butées de battement, pour rotors principaux ou arrières, qui ont été présentées ci-dessus, à l'exception de celle proposée dans le brevet français 2 584 997, il est nécessaire de rapporter, d'une part, sur le moyeu et/ou sur le mât et, d'autre part, sur le pied de pale ou sur un organe de liaison du pied de pale au moyeu, un nombre relativement important de pièces, ce qui est un facteur d'augmentation de la masse, de l'encombrement, de la complexité, et donc du coût, au montage comme à l'entretien, de la tête de rotor.

Le dispositif de butées de battement décrit dans le brevet français 2 584 997 ne présente pas ces inconvénients, mais, par contre, ne constitue qu'une butée franche, en vol, rotor tournant, et occupe un volume substantiel à l'intérieur du mât moyeu tubulaire intégré. Or, lorsque l'on souhaite protéger une partie de la chaîne des commandes de vol en la disposant à l'intérieur du mât moyeu tubulaire intégré, le volume occupé dans ce dernier par les dispositifs de butées de battement peut empêcher une telle disposition.

D'une manière générale, un dispositif de butées de battement selon le brevet français 2 584 997 est d'un encombrement gênant si l'on veut disposer les moyens de commande du pas des pales au plus près de l'extrémité radiale interne de l'organe de liaison de chaque pale au moyeu.

Un autre dispositif de butée est connu de GB-A-2139171.

Un but de la présente invention est de proposer un dispositif de butées pour les oscillations angulaires de battement et/ou de traînée qui soit d'une faible masse, d'un encombrement limité, d'une grande simplicité de structure, et donc économique au montage comme à l'entretien du rotor, lorsque celui-ci est équipé d'un moyeu selon l'un des différents types présentés ci-dessus.

Un autre but de l'invention est de proposer un dispositif de butées absolues de battement, d'un côté et/ou de l'autre du plan de rotation des pales, lorsque le rotor est à l'arrêt ou tourne à une vitesse inférieure à un seuil prédéterminé, le dispositif présentant de plus des butées franches en vol, ou lorsque le rotor tourne a une vitesse supérieure audit seuil prédéterminé, par le fait que le dispositif de butées limite l'amplitude des débattements angulaires en battement et/ou traînée de la pale correspondante.

Un autre but encore de l'invention est de proposer un dispositif de butées mixtes, en battement et traînée, qui présente aussi des butées absolues en traînée vers l'avant et/ou vers l'arrière, lorsque la vitesse de rotation du rotor est inférieure audit seuil prédéterminé, ces butées étant également des butées franches en traînée, lorsque cette vitesse de rotation du rotor est supérieure audit seuil prédéterminé.

Un autre but de l'invention est de proposer un dispositif de butées mixtes de battement et traînée qui permette lorsque le rotor est à l'arrêt ou lorsque sa vitesse de rotation est inférieure à un seuil déterminé, de manoeuvrer librement les pales en pas sur toute la plage angulaire utilisable en vol.

Un autre but enfin de l'invention est de proposer un dispositif de butées mixtes de battement et de traînée qui soit compatible avec des moyens de commande du pas des pales qui soient internes à un mat moyeu tubulaire intégré.

A cet effet, l'invention propose un dispositif de butées pour les pales d'un rotor articulé de giravion comprenant un moyeu de rotor solidaire en rotation d'un mât rotor autour d'un axe de rotation du rotor et auquel chacune des pales est reliée par des moyens de retenue et d'articulation, qui comprennent au moins deux armatures dont l'une en position radiale externe par rapport à l'autre, est rigidement fixée sur le moyeu, tandis que l'autre armature, en position radiale interne, est solidaire en mouvement du pied de la pale correspondante par l'intermédiaire d'une partie fourchue d'attache de la pale au moyeu, le dispositif de butées de battement et de traînée comprenant, pour chaque pale, deux butées dont une première est fixe par rapport au moyeu et comporte un organe de butée, en saillie radiale vers l'extérieur par rapport à ladite armature radiale externe et présentant au moins une zone d'appui définie par au moins une partie d'une surface de révolution autour d'un axe longitudinal dudit organe de butée qui est sensiblement radial et confondu avec l'axe de pas de la pale correspondante, et ladite butée fixe coopère avec la seconde butée, montée mobile sur l'ensemble formé par ladite pale et ladite partie d'attache, et comportant un organe de butée présentant au moins une surface d'appui définie par au moins une partie d'une surface de révolution autour de l'axe longitudinal dudit organe de butée de ladite butée fixe, lorsque la butée mobile est en position de coopération avec la butée fixe, ladite butée mobile étant escamotable sous l'effet de la force centrifuge à l'encontre de moyens de rappel élastique, qui, lorsque la vitesse de rotation du rotor est inférieure a un seuil donné, rappellent la butée mobile vers la butée fixe, dans une position de coopération dans laquelle au moins une surface d'appui de l'organe de butée de la butée mobile est disposée directement en regard et à proximité immédiate d'au moins une zone d'appui dudit organe de butée de ladite butée fixe, de façon à limiter à des valeurs faibles ou nulles les mouvements angulaires de la pale en battement, d'un côté au moins du plan de rotation des pales ainsi qu'en traînée, de part et d'autre de l'axe longitudinal de la pale, par contact d'au moins une surface d'appui de la butée mobile contre au moins une zone d'appui de la butée fixe, tandis que la butée mobile est escamotée vis-à-vis de la butée fixe lorsque ladite vitesse de rotation est supérieure audit seuil, afin de permettre des mouvements angulaires de ladite pale en battement d'un côté au moins du plan de rotation des pales, et en traînée, de part et d'autre de l'axe longitudinal de la pale, caractérisé en ce que ledit organe de butée de la butée fixe a la forme d'un doigt convergent radialement vers l'extérieur, la butée mobile est montée sur ledit ensemble pale-partie d'attache par une articulation à pivotement autour d'un axe de pivot sensiblement parallèle à l'axe de rotation du rotor et décalé latéralement par rapport à l'axe de pas de la pale correspondante, et ledit organe de butée de la butée mobile est conformé en réceptacle dont au moins une surface interne délimite une surface d'appui, et qui est rappelé par pivotement sensiblement radialement vers l'intérieur par lesdits moyens de rappel élastique, en position d'engagement autour du doigt convergent, de sorte qu'aux vitesses de rotation inférieures au seuil donné, chaque surface d'appui du réceptacle est sensiblement en contact avec une zone d'appui correspondante sur la périphérie du doigt convergent, afin de former une butée absolue en battement d'un côté et/ou de l'autre du plan de rotation des pales et en traînée vers l'arrière et/ou vers l'avant par rapport au sens de rotation du rotor, et que, pour une vitesse de rotation supérieure audit seuil et progressivement croissante, ledit réceptacle est pivoté radialement vers l'extérieur contre les moyens de rappel et progressivement dégagé du doigt convergent de façon à délimiter entre chaque surface d'appui du réceptacle et une zone d'appui correspondante du doigt convergent, un jeu progressivement croissant permettant des débattements angulaires progressivement croissants de la pale correspondante en battement et en traînée, afin de former une butée franche en vol, pour les mouvements de battement et traînée de la pale.

Un tel dispositif de butées, simple, léger, fiable, d'une grande précision et présentant de bonnes performances, assure ainsi deux fonctions :

- lorsque la vitesse de rotation du rotor est inférieure ou égale au seuil donné, lui-même inférieur au régime minimum de rotation du rotor permettant le vol de l'hélicoptère, le dispositif de butées est amené, par les moyens de rappel élastique, dans une position dite "sol", dans laquelle il immobilise l'ensemble pale-pièce d'attache fourchue, en limitant ses mouvements de battement et de traînée à des valeurs faibles ou nulles, ce qui répond à deux besoins,

- - le premier est de permettre de se dispenser de la mise en place, sur les extrémités des pales, en particulier des rotors arrières d'hélicoptères, de bonnettes reliées par des câbles au fuselage, ou d'autres outillages, pour éviter les oscillations angulaires des pales lors du stationnement de l'hélicoptère dans le vent, et

- - le second est de protéger les articulations des pales sur le moyeu des effets du battement permanent des pales à l'arrêt, et

- lorsque la vitesse de rotation du rotor est supérieure audit seuil, le dispositif de butées est amené par la force centrifuge dans une position dite "vol", dans laquelle il limite l'angle de battement et de traînée des pales, en réalisant une butée franche, qui est nécessaire pour garantir que, même lors de manoeuvres exceptionnelles les pales ne viendront pas percuter la structure de l'hélicoptère, et que les pièces mobiles du moyeu ne viendront pas en contact les unes avec les autres.

Avantageusement de plus, dans la position "sol", le dispositif de butées autorise le libre débattement des pales en pas, de façon à permettre la vérification du bon fonctionnement du dispositif de commande de pas avant le vol et sur toute la plage de pas utilisable, par le fait que chaque zone d'appui sur la périphérie du doigt convergent est définie par au moins une partie d'une surface de révolution autour d'un axe longitudinal de ce doigt, qui est sensiblement radial et confondu avec l'axe de changement de pas de la pale correspondante.

La vérification du bon fonctionnement du dispositif de commande de pas des pales est assurée sans introduire de jeu fonctionnel dans le dispositif de butées du fait que, de plus, chaque surface d'appui du réceptacle de la butée mobile est également définie par au moins une partie d'une surface de révolution autour de l'axe longitudinal du doigt convergent de la butée fixe, lorsque la butée mobile est en position de coopération avec la butée fixe.

Dans une forme de réalisation avantageusement simple, au moins une partie de la surface périphérique du doigt convergent est une surface sensiblement tronconique formant une zone d'appui continue, et le réceptacle présente une surface interne de forme également sensiblement tronconique, en regard et sensiblement en contact avec la surface sensiblement tronconique du doigt convergent en position d'engagement du réceptacle autour de ce doigt convergent.

Pour qu'un tel dispositif de butées, assurant les deux fonctions "sol" et "vol" avec les mêmes pièces, et permettant le contrôle du libre débattement de la commande de pas avant la mise en rotation du rotor, soit peu sujet au blocage, et que les effets d'un mauvais fonctionnement soient faibles, il est en outre avantageux que l'angle au sommet de la surface d'appui tronconique du réceptacle soit inférieur à l'angle au sommet de la zone tronconique d'appui du doigt convergent.

Dans tous les cas, il est avantageux que le réceptacle comporte une partie annulaire, dont la face interne forme une unique surface d'appui continue de la butée mobile. Dans une première variante, le réceptacle comporte un fond fermant la partie annulaire du côté de son extrémité radiale externe, par rapport à l'axe de rotation du rotor, et limitant l'engagement du réceptacle autour du doigt convergent par contact avec l'extrémité radiale externe du doigt convergent. Mais il est également possible que le réceptacle soit un anneau ouvert à ses deux extrémités radiales par rapport à l'axe de rotation du rotor, et s'emmanchant autour du doigt convergent.

Dans ces différents cas, le réceptacle, tel que l'anneau de la butée mobile est d'une masse déterminée pour qu'il constitue simultanément une masselotte escamotée radialement vers l'extérieur à l'encontre des moyens de rappel élastique, dès que la vitesse de rotation du rotor est supérieure au seuil donné.

D'une manière simple et pratique, l'axe de pivot de la butée mobile est monté dans une chape d'une pièce support fixée sur l'ensemble pale-partie d'attache, cette pièce support étant de préférence rapportée de manière amovible dans la partie d'attache fourchue de la pale au moyeu.

Selon un mode de réalisation simple de la butée mobile, le réceptacle de cette dernière est supporté par un bras en saillie latérale vers l'extérieur sur un manchon monté tourillonnant autour de l'axe de pivot. Dans ce cas, il est avantageux pour diminuer l'encombrement des moyens de rappel élastique et simplifier leur montage, que ces moyens comprennent au moins un ressort de torsion entourant le manchon de la butée mobile et prenant appui, d'une part, contre une première butée fixe de l'ensemble pale-partie d'attache, et, d'autre part, sur le bras de la butée mobile, pour faire pivoter le réceptacle correspondant vers le doigt convergent de la butée fixe du dispositif de butées de battement.

Afin d'éviter les coincements de l'organe de butée, conformé en réceptacle, de la butée mobile sur l'organe de butée, conformé en doigt radial, de la butée fixe, il est avantageux que la butée mobile comporte également un ergot, qui se trouve appliqué, par l'effet des moyens de rappel élastique, contre une seconde butée fixe de l'ensemble pale-partie d'attache, lorsque la vitesse de rotation du rotor est inférieure audit seuil donné, afin de limiter le pivotement radialement vers l'intérieur de la butée mobile de façon à laisser subsister un faible jeu entre la surface d'appui de la butée mobile et la zone d'appui de la butée fixe, en position de coopération des deux butées.

Lorsque l'articulation de la butée mobile sur l'ensemble pale-partie d'attache est supportée par la pièce support mentionnée ci-dessus comme présentant une chape de montage de l'axe de pivot de cette articulation, il est en outre avantageux que la seconde butée fixe de l'ensemble pale-partie d'attache soit formée par une surface de butée délimitée sur une nervure de cette pièce support. De même, la première butée fixe de l'ensemble pale-partie d'attache est également et avantageusement présentée par cette pièce support, afin que le montage de cette dernière, lorsqu'elle porte la butée mobile, sur la partie d'attache fourchue de la pale au moyeu soit la seule intervention nécessaire pour que l'ensemble pale-partie d'attache soit équipée de sa butée mobile.

Selon un exemple de réalisation simple, léger, peu encombrant et performant, le manchon de la butée mobile comporte une partie centrale supportant le bras correspondant, et deux parties d'extrémité cylindriques, dont chacune est entourée par l'une respectivement de deux parties hélicoïdales d'un ressort de torsion, sur lequel l'extrémité de chaque partie hélicoïdale située du côté de l'autre partie hélicoïdale est conformée en languette d'appui contre le bras de la butée mobile, tandis que les extrémités opposées des deux parties hélicoïdales du ressort sont reliées l'une à l'autre et forment un arceau en appui sur la première butée fixe de l'ensemble pale-partie d'attache.

Afin de déplacer la zone de contact et de martèlement en cours de vie de la butée fixe, le doigt convergent de cette dernière est de préférence monté sur un axe support central et radial par rapport à l'axe de rotation du rotor, cet axe support étant solidaire du moyeu, et le doigt convergent pouvant prendre, autour de cet axe support, plusieurs positions de travail et être bloqué dans chacune de ces positions.

Afin de faciliter le montage de la butée fixe, son axe support central est fixé à l'armature radiale externe des moyens de retenue et d'articulation de la pale correspondante sur le moyeu, et coaxialement à l'axe de pas de la pale correspondante, et le positionnement et le blocage du doigt convergent autour de l'axe support est assuré par un dispositif d'indexation en rotation autour de l'axe de pas de la pale correspondante.

Selon un exemple simple et pratique de réalisation, l'axe support est fileté à son extrémité radiale externe, et d'une seule pièce par son extrémité radiale interne avec une portée cylindrique coaxiale, présentée en saillie radiale vers l'extérieur par une pièce de fixation de l'armature radiale externe sur le moyeu, de sorte que le doigt convergent de la butée fixe est emmanché et retenu sur l'axe support par appui d'un épaulement interne de ce doigt convergent contre un épaulement de raccordement de l'axe support à la portée cylindrique, et par un écrou vissé sur l'extrémité filetée de l'axe support, le dispositif d'indexation comprenant une broche transversale retenue dans la porté cylindrique et dont au moins une extrémité fait saillie par rapport à la surface latérale de cette portée cylindrique et est engagée dans l'une de plusieurs encoches ménagées dans une portion du doigt convergent qui entoure la portée cylindrique, afin de bloquer ce doigt dans la position correspondante en rotation autour de l'axe support.

Enfin, pour prolonger la durée de vie de la butée fixe, son doigt convergent comporte avantageusement une âme réalisée en un matériau rigide et entourée d'un revêtement en élastomère de protection contre le martèlement par la butée mobile.

L'invention a également pour objet une tête de rotor articulé de giravion, du type comprenant un moyeu de rotor solidaire en rotation d'un mât rotor autour d'un axe de rotation du rotor, et auquel chacune des pales du rotor est reliée par une partie d'attache fourchue à deux branches et par des moyens de retenue et d'articulation sur le moyeu qui comprennent une armature radiale externe, fixée sur le moyeu, et une armature radiale interne, fixée aux extrémités radiales internes des deux branches de la partie d'attache fourchue correspondante, la tête de rotor selon l'invention se caractérisant en ce qu'elle comprend, pour chaque pale, un dispositif de butées de battement et traînée propre à l'invention et tel que défini ci-dessus, et les moyens de retenue et d'articulation comportant une butée lamifiée sphérique intégrée entre les deux armatures correspondantes, et logée entre les deux branches de la partie d'attache fourchue correspondante, de sorte que son centre de rotation soit sensiblement situé du côté de l'armature radiale externe.

En effet, le dispositif de butées de battement et traînée selon l'invention permet de réaliser des butées précises et performantes pour des rotors sur lesquels les axes de battement et de traînée des pales ne sont pas matérialisés, comme cela est le cas pour les rotors articulés à l'aide de butées lamifiées sphériques.

Afin d'assurer dans un faible encombrement une bonne liaison entre chaque partie d'attache fourchue et l'armature radiale interne correspondante, cette dernière présente, dans ses faces axiales opposées, des évidements d'encastrement des extrémités radiales internes des branches de la partie d'attache fourchue auxquelles l'armature radiale interne est directement attachée par une unique broche d'axe sensiblement parallèle à l'axe de rotation du rotor.

Comme le dispositif de butées de battement et traînée se trouve radialement à l'extérieur de l'armature radiale externe des moyens de retenue et d'articulation de chaque pale sur le moyeu, la tête de rotor selon l'invention comporte avantageusement, pour chaque pale, un levier de commande de pas qui est d'une seule pièce avec l'armature radiale interne correspondante et en saillie latérale par rapport à cette dernière, ce levier de commande de pas présentant une chape radiale dans laquelle est articulée une extrémité d'une bielle de commande de pas, dont l'autre extrémité est articulée à un dispositif de commande de pas.

Pour l'équipement d'un rotor arrière d'hélicoptère, la tête de rotor selon l'invention peut être telle que la partie d'attache fourchue de chaque pale est intégrée au pied de la pale correspondante. Par contre, pour l'équipement d'un rotor principal d'hélicoptère, la tête de rotor peut être telle que la partie d'attache fourchue de chaque pale est un organe de liaison sensiblement radial tel qu'un manchon, conformé à son extrémité radiale interne en chape dont les deux branches sont fixées à l'armature radiale interne des moyens de retenue et d'articulation correspondants, et conformé à son extrémité radiale externe en chape de fixation au pied de la pale correspondante par deux axes sensiblement parallèles à l'axe de rotation du rotor, et dont l'un est éventuellement amovible, afin de permettre le repliage de la pale par pivotement autour de l'autre axe.

Sur la tête de rotor selon l'invention, le moyeu peut comprendre deux plateaux radiaux superposés et espacés axialement l'un de l'autre, et entre les bords desquels l'armature radiale externe des moyens de retenue et d'articulation de chaque pale est montée en entretoise et traverse des évidements ménagés dans les deux branches de la partie d'attache fourchue correspondante.

Mais il est également possible que la tête de rotor selon l'invention soit telle que le moyeu comprenne un unique plateau radial percé, pour chaque pale, d'un alvéole dans lequel sont au moins partiellement logés les moyens de retenue et d'articulation correspondants, dont l'armature radiale externe est retenue contre le bord externe de l'alvéole et sur la partie périphérique correspondante du plateau.

Enfin, la tête de rotor selon l'invention peut être avantageusement telle que le moyeu et le mât rotor soient réalisés sous la forme d'un mât moyeu tubulaire intégré, percé, pour chaque pale, d'au moins une ouverture traversée par l'une des branches de la partie d'attache fourchue correspondante, et à l'intérieur duquel sont au moins partiellement logés les moyens de retenue et d'articulation correspondants, fixés en appui par leur armature radiale externe contre une partie de la face interne du mât moyeu tubulaire intégré.

Dans ce dernier cas, la tête de rotor selon l'invention est particulièrement appropriée pour l'équipement d'un rotor arrière d'hélicoptère, le mât moyeu tubulaire intégré étant alors de préférence de forme sensiblement tronconique et destiné à être solidarisé en rotation, du côté de sa petite base, à l'arbre de sortie de la boîte de transmission auxiliaire, le mât moyeu tubulaire intégré enveloppant un dispositif de commande du pas général des pales du rotor arrière comprenant un manchon collectif, monté axialement coulissant à l'intérieur du mât moyeu tubulaire, et dont la partie d'extrémité axiale tournée vers la grande base du mât moyeu porte, pour chaque pale, une chape radiale dans laquelle est articulée une extrémité d'une bielle de commande de pas correspondante.

Enfin, pour assurer une bonne fixation et un bon positionnement des moyens de retenue et d'articulation des pales au moyeu, dans une tête de rotor dont le moyeu comprend un unique plateau radial ou est réalisé sous la forme d'un mât moyeu tubulaire intégré, il est avantageux que, pour chaque pale, l'armature radiale externe correspondante soit conformée, radialement vers l'extérieur, en étrier qui chevauche une partie correspondante du moyeu, sur laquelle cette armature interne est fixée à l'aide d'une pièce de fixation conformée en étrier radialement vers l'intérieur, chevauchant également la partie correspondante du moyeu et portant la butée fixe du dispositif de butées de battement.

La présente invention sera mieux comprise, et d'autres avantages et caractéristiques de l'invention ressortiront à la lecture de la description donnée ci-dessous, à titre non limitatif, de différents exemples de réalisation représentés sur les dessins annexés sur lesquels :

- la figure 1 représente partiellement la tête d'un rotor arrière articulé quadripale d'hélicoptère, en partie en élévation latérale, en partie en coupe par le plan de rotation des pales et avec arrachement partiel,

- la figure 2 représente la tête de rotor de la figure 1, en partie en coupe par un plan diamétral passant par l'axe de rotation du rotor et en partie en plan selon une direction perpendiculaire à cet axe,

- la figure 3 est une coupe schématique selon III-III de la figure 2,

- la figure 4 est une vue à plus grande échelle et en partie en coupe, de la butée mobile du dispositif de butées de battement et de traînée équipant la tête de rotor des figures 1 et 2 pour chacune des ses quatre pales,

- la figure 5 est une vue en coupe selon V-V de la figure 4,

- la figure 6 est une vue en élévation latérale de la butée mobile de la figure 4,

- la figure 7 représente un ressort de torsion, monté sur la butée mobile des figures 4 à 6 de la façon représentée sur la figure 3,

- la figure 8 est une vue en bout du ressort de la figure 7,

- la figure 9 est une vue à plus grande échelle et en coupe diamétrale selon IX-IX de la figure 10, d'un organe de butée tronconique de la butée fixe du dispositif de butées de battement et de traînée équipant la tête de rotor des figures 1 et 2,

- la figure 10 est une vue de la grande base de l'organe de butées tronconique de la figure 9,

- la figure 11 est une vue en perspective d'une butée lamifiée sphérique, avec ses armatures radiales interne et externe, et constituant les moyens de retenue et d'articulation de chacune des quatre pales sur le moyeu de la tête de rotor des figures 1 et 2,

- la figure 12 représente partiellement, dans des conditions analogues à la figure 2, une variante de réalisation du dispositif de butées de battement et de traînée équipant la tête de rotor des figures 1 et 2,

- la figure 13 représente schématiquement la tête de rotor des figures 1 et 2,

- la figure 14 représente une autre tête de rotor articulé, comportant le même mât moyeu tubulaire intégré que celui de la figure 13, mais avec un manchon radial de liaison de chaque pale à ce mât moyeu,

- la figure 15 représente schématiquement une autre tête de rotor articulé, dont le moyeu comporte un unique plateau radial alvéolé, associé à des pales dont le pied se prolonge par une partie d'attache fourchue,

- la figure 16 représente schématiquement une autre variante de tête de rotor articulé, munie d'un moyeu selon la figure 15, et auquel chacune des pales est reliée par un manchon radial, et

- la figure 17 représente schématiquement encore une autre variante (de tête de rotor articulé, dont le moyeu comporte deux plateaux radiaux, les têtes de rotor selon les figures 13 à 17 étant toutes équipées de dispositifs de butées de battement et traînée selon l'invention.

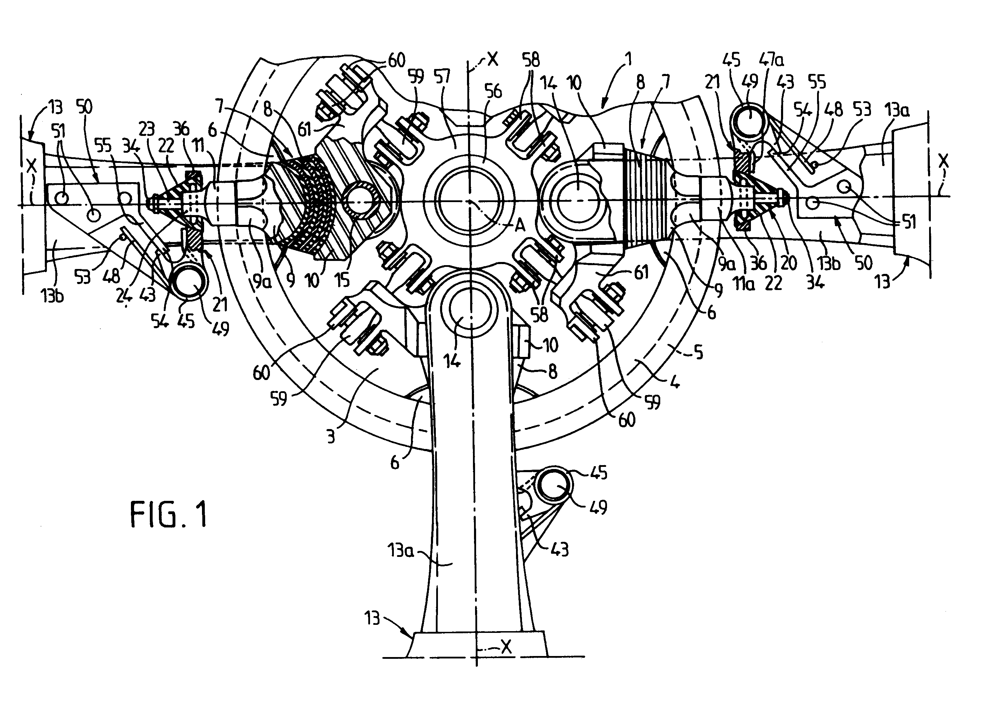

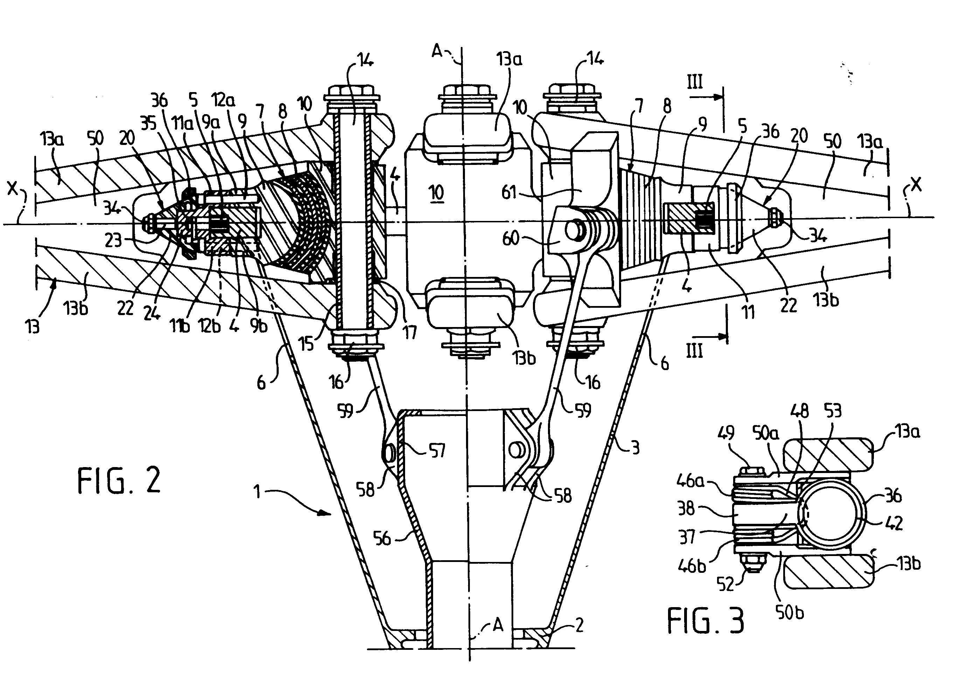

En référence aux figures 1 et 2, la tête de rotor arrière articulé quadripale comporte un mât moyeu tubulaire intégré 1, essentiellement constitué d'un corps tubulaire monobloc, de forme générale extérieure sensiblement tronconique, à symétrie de révolution autour d'un axe A, qui est l'axe de rotation du rotor, et dont la partie située du côté de la petite base, ou partie axiale interne (par rapport au plan longitudinal de symétrie de l'hélicoptère, non représenté mais perpendiculaire à l'axe A sur le bas de la figure 2), forme un mât tubulaire 2, solidaire en rotation autour de l'axe A de l'arbre de sortie de la boîte de transmission auxiliaire, montée à l'arrière de l'hélicoptère pour assurer l'entraînement du mât moyeu 1, et donc du rotor arrière, en rotation autour de l'axe A. La partie du mât moyeu 1 située du côté de sa grande base, ou partie axiale externe, forme un corps de moyeu tubulaire 3. Le mât 2 se raccorde à la partie formant corps de moyeu 3 et se prolonge ainsi directement par cette partie 3, qui s'évase depuis le mât 2 jusqu'à son extrémité axiale externe libre (correspondant à la grande base du corps tronconique), surépaissie localement et périphériquement en anneau circulaire ou jante de renforcement 4, de section transversale rectangulaire et en saillie radialement vers l'extérieur du corps de moyeu 3. La jante 4 entoure ainsi l'ouverture circulaire de l'extrémité externe libre du corps de moyeu 3. Le corps tubulaire monobloc 1, constitué par le mât 2 et par le corps de moyeu 3 avec sa jante 4, peut être réalisé en matériaux composites, ou être métallique, par exemple en acier ou en titane, et, dans ce dernier cas, réalisé à partir d'une ébauche matricée ou forgée. De plus, la jante 4 présente une gorge périphérique, de section rectangulaire ou carrée, qui s'ouvre dans sa face radiale externe, et une ceinture 5 en matériaux composites est logée dans cette gorge. Cette ceinture 5 est réalisée par exemple par bobinage, dans la gorge de la jante 4, de stratifils unidirectionnels de carbone ou de fibres aramides, préimprégnés d'une résine époxyde, puis par polymérisation de la résine qui est durcie. Cette ceinture 5 procure la redondance nécessaire, en cas de rupture du corps de moyeu 3, à la suite d'une crique ou d'un impact balistique, pour la reprise des efforts centrifuges. Des ouvertures radiales 6, identiques et en nombre égal au nombre des pales du rotor, donc quatre ouvertures 6 dans cet exemple, sont pratiquées dans la portion du corps de moyeu 3 qui est directement adjacente à la jante 4, et sont régulièrement réparties en direction circonférentielle sur le pourtour de cette portion.

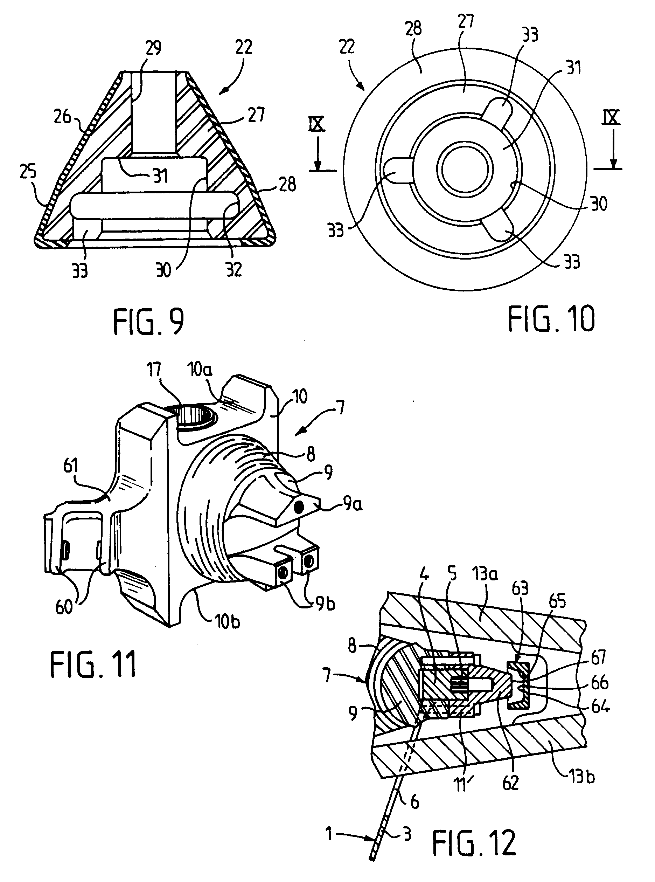

Chacune des quatre pales du rotor est reliée à la partie formant corps de moyeu 3 par des organes de retenue et d'articulation constitués, dans cet exemple, par une butée sphérique lamifée 7, essentiellement logée dans le corps de moyeu 3 à l'intérieur de la jante 4, et représentée isolée et en perspective sur la figure 11. Cette butée sphérique lamifée 7 permet l'articulation de la pale correspondante sur le moyeu 3 autour de ses trois axes de battement, de traînée et de changement de pas, qui se coupent au point de rotulage déterminé par le centre de rotation de la butée sphérique lamifiée correspondante. Cet organe est un composant désormais bien connu, comprenant essentiellement une partie centrale lamifiée 8, constituée d'un empilement de couche en forme de calottes sphériques et alternativement rigides, par example métalliques, et en un matériau élastique, tel qu'un caoutchouc synthétique, par exemple en élastomère de silicone, cette partie centrale lamifiée 8 étant vulcanisée entre deux armatures rigides 9 et 10, par exemple métalliques.

Chaque butée lamifée sphérique 7 est appliquée contre la face radiale interne de la jante 4, au niveau de la partie de cette dernière située directement audessus d'une ouverture 6, et la butée sphérique lamifiée 7 est fixée contre la jante 4 par son armature radiale externe 9, conformée, dans sa partie radiale externe, en étrier ouvert radialement vers l'extérieur afin de chevaucher partiellement la jante 4. Comme représenté sur la figure 11, cette partie radial externe en étrier de l'armature radiale externe 9 comporte un bras supérieur 9a séparé de deux bras inférieurs 9b parallèles, par un espace suffisant pour recevoir une partie de la jante 4. Par sa partie radiale interne, de forme convexe, l'armature externe 9 est solidaire de la face externe concave de la partie central lamifiée 8 de cette butée 7, tandis que cette partie centrale lamifiée 8 est solidaire, par sa face interne convexe, de la partie radiale externe concave de l'armature radiale interne 10. Chaque butée sphérique lamifiée 7 est disposée à l'intérieur de l'ouverture de l'extrémité axiale externe du corps de moyeu 3 délimitée par la jante 4, de sorte que son centre de rotation soit situé dans le plan médian de la jante 4 et de préférence dans l'épaisseur de la ceinture de renfort 5 de cette jante 4.

Chaque butée sphérique lamifiée 7 est retenue en position sur la jante 4 du corps de moyeu 3 à l'aide d'une pièce de fixation 11, également rigide, dont une partie radiale interne est également conformée en étrier, mais ouvert radialement vers l'intérieur, afin de pouvoir chevaucher également partiellement la jante 4. Cette pièce de fixation en étrier 11 présente ainsi un bras axial externe 11a et un bras axial interne 11b parallèles et séparés l'un de l'autre d'une distance correspondant à l'épaisseur axiale de la jante 4, et disposés respectivement en regard du bras axial externe 9a et des bras axiaux internes 9b de la partie en étrier de l'armature 9, de manière à entourer complètement la partie de jante 4 correspondante, en passant, pour les bras axiaux externes 9a et 11a, à l'extérieur de cette partie de jante 4, et pour les bras axiaux internes 9b et 11b, à l'intérieur de cette partie de jante 4, dans l'ouverture 6 correspondante. La liaison rigide entre la pièce de fixation 11 et l'armature radiale externe 9 est assurée par une vis axiale externe 12a introduite radialement depuis l'extérieur au travers du bras 11a de la pièce 11 et vissée dans le bras 9a de l'armature 9, ainsi que par deux vis axiales internes 12b, introduites radialement de l'extérieur au travers du bras 11b de la pièce de fixation 11 et vissées chacune dans l'un des deux bras 9b de l'armature 9. Les perçages taraudés ménagés dans les bras 9a et 9b de cette armature 9, pour recevoir les vis 12a et 12b de solidarisation de la pièce 11 de fixation sur la jante 4, sont visibles sur la figure 11.

Le pied de chaque pale est conformé en partie d'attache fourchue 13 à deux branches 13a et 13b axialement écartées, dont la branche interne 13b traverse l'ouverture 6 correspondante du corps de moyeu 3, et dont la branche externe 13a s'étend à l'extérieur de la jante 4 et de la butée sphérique lamifiée 7 correspondante. Les extrémités radiales internes des deux branches 13a et 13b sont engagées respectivement dans des évidements d'encastrement 10a et 10b ménagés respectivement dans les faces axiale externe et axiale interne de l'armature radiale interne 10 de la butée sphérique lamifiée 7 correspondante. Ces extrémités des deux branches 13a et 13b sont fixées contre cette armature interne 10 par un boulon 14, qui traverse axialement de l'extérieur vers l'intérieur une unique broche tubulaire cylindrique 15 logée dans des perçages alignés percés dans l'armature interne 10 et dans ces extrémités radiales internes des branches 13a et 13b, la tête du boulon 14 étant en appui contre la branche externe 13a, et un écrou 16 étant vissé et retenu sur l'extrémité filetée de la tige du boulon 14 qui dépasse vers l'intérieur de la branche interne 13b, tandis que le perçage ménagé axialement dans l'armature interne 10 est équipé, à ses deux extrémités axiales, de bagues épaulées anti-frottement 17, dont une est partiellement visible sur la figure 11, dans le fond de l'évidement axial externe 10a, où débouche le perçage de l'armature 10 traversé par la broche 15 et le boulon 14.

L'armature interne 10, reliant le pied fourchu 13 de la pale à la butée sphérique 7, fait ainsi également fonction d'entretoise maintenant les deux branches 13a et 13b écartées avec un écartement constant.

Dans ce montage, l'axe de la broche 15 et du boulon de liaison 14, en position de repos de la pale, est sensiblement parallèle à l'axe A et coupe sensiblement perpendiculairement l'axe de changement de pas X-X de la pale correspondante, sur lequel est situé le centre de rotulage de la butée sphérique lamifiée 7 correspondante.

Afin de limiter les mouvements angulaires de battement des pales de chaque côté du plan de rotation du rotor arrière, sensiblement défini par les axes de changement de pas X-X sur la figure 2, ainsi que les mouvements angulaires des pales en traînée dans leur plan de rotation, la tête de rotor comporte, pour chaque pale, un dispositif de butées de battement et de traînée comportant une butée fixe 20, solidaire du moyeu 3, et une butée mobile 21 montée sur la partie d'attache fourchue 13 de la pale correspondante.

Chaque butée fixe 20 comprend un organe de butée proprement dit 22, conformé en doigt de forme générale tronconique, monté de sorte qu'il soit convergent radialement vers l'extérieur, et en saillie radiale vers l'extérieur par rapport à l'armature 9 correspondante, sur un axe support 23 central et radial, centré sur l'axe de pas X-X de la pale correspondante. Cet axe support 23 a une extrémité radiale externe filetée et est solidarisé par son extrémité radiale interne a une portée cylindrique coaxiale 24 de plus grand diamètre présenté par la pièce de fixation 11 correspondante, radialement à l'extérieur de sa partie en étrier 11a-11b.

Le doigt de butée 22, représenté à plus grande échelle sur les figures 9 et 10, est de forme générale tronconique, et présente une surface latérale ou périphérique de révolution autour de son axe longitudinal. Cette surface latérale de révolution, qui forme une zone d'appui continue sur la périphérie du doigt 22, est définie par deux étages tronconiques, dont l'un 25, adjacent à la grande base, correspond à un angle au centre légèrement plus petit que celui correspondant à l'étage tronconique 26 adjacent à la petite base. le doigt 22 est constitué d'une âme rigide 27, par exemple en alliage d'aluminium, dont la surface latérale est recouverte d'un revêtement 28 en élastomère de protection contre le martèlement par la butée mobile, et qui est adhérisé à l'âme 27 et recouvre également le bord de la grande base du doigt 22. La moitié du doigt 22 située du côté de sa petite base est percée d'un alésage coaxial 29, de diamètre correspondant à celui de l'axe support 23, et débouchant dans un contre alésage coaxial de plus grand diamètre 30, percé dans la moitié du doigt 22 située du côté de sa grande base, de sorte que les deux alésages 29 et 30 se raccordent l'un à l'autre par un épaulement radial interne 31. De plus, une gorge de dégagement 32 est usinée radialement vers l'extérieur dans la face latérale de l'alésage 30, et trois encoches 33, équidistantes en direction circonférentielle autour de l'axe longitudinal du doigt 22, sont usinées axialement dans sa grande base et débouchent dans la gorge 32.

Le doigt 22 peut ainsi être emmanché radialement de l'extérieur vers l'intérieur autour de l'axe support 23, jusqu'à l'appui de son épaulement interne 31 contre l'épaulement de raccordement de l'axe support 23 à la portée cylindrique 24, de sorte que cette dernière est également entourée par le doigt 22, qui est bloqué dans cette position par vissage d'un écrou 34 sur l'extrémité filetée radiale externe de l'axe support 23, comme représenté sur les figures 1 et 2. Dans cette position, l'axe longitudinal du doigt 22 et de l'axe support 23 est confondu pratiquement avec l'axe de changement de pas X-X de la pale correspondante. La position du doigt 22 autour de l'axe support 23 peut être choisie grâce à un dispositif d'indexation en rotation très simple, permettant le blocage dans l'une quelconque de plusieurs positions de travail possibles de ce doigt 22 sur l'axe support 23. Ce dispositif d'indexation comprend une broche transversale 35 retenue par la portée cylindrique 24, perpendiculairement à son axe, et dont une extrémité est en saillie sur la face latérale cylindrique de la portée 24, de façon à être engagée dans l'une des encoches 33 présentées par la grande base du doigt conique 22. Cet engagement de l'extrémité de la broche 35 dans une encoche 33 du doigt 22 est représenté sur la figure 2, et permet de bloquer ce doigt 22 dans chacune des trois positions de travail ainsi définies autour de l'axe de pas X-X de la pale correspondante.

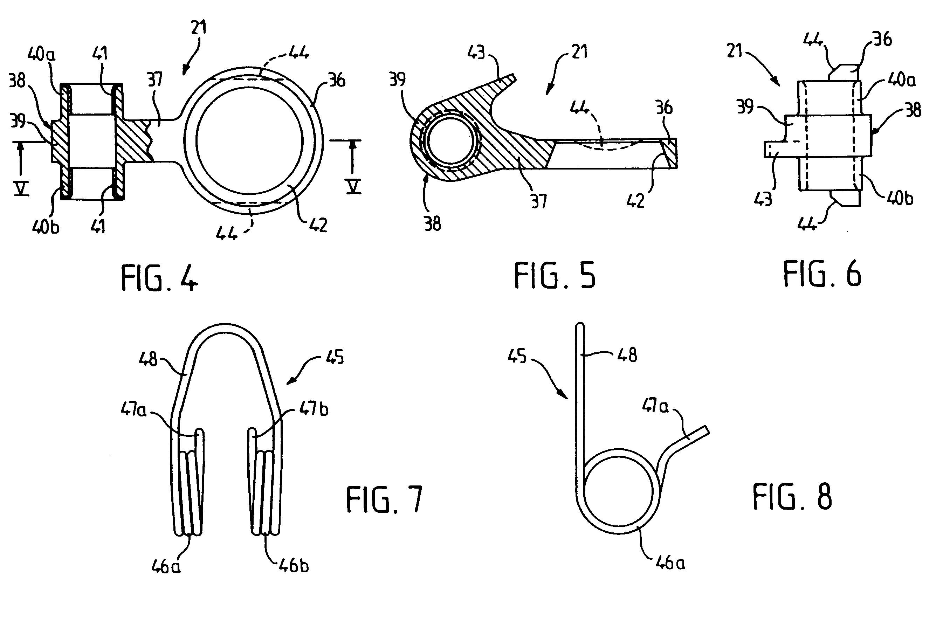

La butée mobile 21 est une butée montée pivotante entre les branches 13a et 13b de la partie d'attache fourchue 13 correspondante, et la structure de cette butée 21 est représentée à plus grande échelle sur les figures 4 à 6. Cette butée mobile 21 comprend un réceptacle de butée, conformé en anneau circulaire 36 supporté par une extrémité d'un bras 37 en saillie latérale par rapport à un manchon 38, à la partie centrale 39 duquel le bras 37 est solidarisé par son autre extrémité. L'anneau 36 et le bras 37 sont d'une seule pièce avec le manchon 38, dont la partie centrale 39 est surépaissie radialement vers l'extérieur par rapport à ses deux parties cylindriques d'extrémité 40a et 40b, équipées chacune d'une bague interne épaulée et antifrottement 41, garnissant ainsi les extrémités axiales de l'alésage interne cylindrique du manchon 38. La surface interne de l'anneau 36 est une surface tronconique 42 d'axe perpendiculaire à l'axe du manchon 38, dont la partie centrale 39 porte également un ergot 43 en saillie latérale vers l'arrière de l'anneau 36, du côté de la face frontale de cet anneau 36 dans laquellle s'ouvre la petite base de la surface tronconique 42. Les parties de l'anneau 36 qui sont diamétralement opposées dans une direction parallèle à l'axe du manchon 38, présentent des chanfreins 44 ménagés dans la face frontale du côté de l'ergot 43.

Cette butée 21 coopère avec un ressort de rappel, qui est un ressort de torsion 45 représenté sur les figures 7 et 8. Ce ressort de torsion 45 comprend deux parties hélicoïdales 46a et 46b, qui sont coaxiales, décalées axialement l'une de l'autre, et enroulées avec de pas opposés, l'extrémité interne de chaque enroulement 46a ou 46b, c'est-à-dire l'extrémité située du côté de l'autre enroulement, étant repliée en languette d'appui rectiligne 47a ou 47b, tandis que les extrémités externes ou opposées des enroulements 46a et 46b sont reliées l'une à l'autre en formant un arceau d'appui 48. Le ressort 45 est monté sur la butée mobile 21 de sorte que les enroulements 46a et 46b entourent respectivement les parties d'extrémités 40a et 40b du manchon 39, et que les languettes 47a et 47b de leurs extrémités internes prennent appui derrière le bras 37, du côté de sa face frontale tournée vers l'ergot 43, tandis que l'arceau 48 se place derrière cet ergot 43. L'ensemble de la butée mobile 21 et du ressort est monté, comme représenté sur les figures 1 et 3, tourillonnant autour d'un axe de pivot 49, traversant le manchon 38 de la butée mobile 21, et retenu entre les deux branches 50a et 50b d'une chape d'une pièce métallique 50 boulonnée entre les branches 13a et 13b de la partie d'attache fourchue 13 correspondante. La pièce métallique 50 de support de la butée mobile 21 et de son articulation à pivotement est fixée entre les branches 13a et 13b par trois boulons 51, d'axe parallèle à l'axe du rotor, et schématiquement représentés sur la figure 1, et les deux branches 50a et 50b de la chape de cette pièce sont sensiblement parallèles l'une à l'autre et au plan de rotation du rotor, et disposées symétriquement de part et d'autre de ce plan de rotation, entre les branches 13a et 13b, en s'étendant en porte-à-faux par rapport à ces branches 13a et 13b, dans une direction inclinée vers l'avant du bord d'attaque de la pale correspondante et vers la butée lamifiée sphérique 7 de la pale immédiatement précédente, dans le sens de rotation du rotor. L'axe de pivot 49 est constitué par un goujon, retenu par sa tête contre la branche 50a de la chape de support, et dont la tige présente une extrémité filetée en saillie de l'autre côté de la branche opposée 50b, et sur laquelle est vissé et retenu un écrou 52.

Les dimensions des branches de chape 50a et 50b sont telles que l'axe de pivot 49 se trouve décalé latéralement par rapport à l'axe de changement de pas X-X de la pale correspondante, au niveau de la portée cylindrique 24 supportant le doigt conique 22. Le montage de la butée mobile 21 et du ressort 45 autour de l'axe de pivot 49 est tel que la face frontale de l'anneau 36 présentant la grande ouverture de la surface tronconique 42 est tournée vers le doigt conique 22, et que le ressort de rappel en torsion 45 prend appui, d'une part, par son arceau 48 contre une tige fixe 53 montée entre les branches de chape 50a et 50b, et, d'autre part, par ses languettes d'appui 47a et 47b contre le bras 37 de la butée mobile 21, de façon à rappeler cette dernière en pivotement radialement vers l'intérieur, en position d'engagement de son anneau 36 autour du doigt conique 22 de la butée fixe 20.

Pour éviter tout coincement de l'anneau 36 sur le doigt 22, l'angle au sommet de la surface interne tronconique 42 de l'anneau 36 est sensiblement plus petit que celui du premier étage tronconique 25 que l'anneau 36 vient entourer en position d'engagement maximum sur le doigt 22, et, de plus, l'ergot 43 assure une limitation du débattement angulaire de l'anneau 36 radialement vers l'intérieur sous l'action du ressort de rappel 45, en venant en contact avec une petite surface plane de butée fixe 54 ménagée sur une nervure 55 présentée par la branche de chape 50b et en saillie vers l'autre branche de chape 50a de la pièce de support 50. En position de butée de l'ergot 43 contre la nervure 55, il subsiste un faible jeu entre la surface interne 42 de l'anneau 36 et la surface tronconique 25 directement en regard sur le doigt conique 22.

Dans cette position, représentée sur les figures 1 et 2, et dite position "sol", que la butée mobile 21 occupe lorsque le rotor est à l'arrêt ou qu'il tourne avec une vitesse de rotation inférieure à un seuil prédéterminé, lui-même inférieur au régime minimal de rotation nécessaire en vol, on constate que les oscillations de la pale en battement, vers le haut comme vers le bas, et en traînée, vers l'avant comme vers l'arrière, sont bloquées sensiblement dans le plan de l'anneau 36, par la venue en contact de sa surface tronconique interne 42 contre la surface périphérique du doigt conique 22. Cependant, les oscillations angulaires de la pale autour de son axe de changement de pas X-X restent libres, ce qui permet la commande en pas, même lorsque l'anneau 36 coiffe le doigt conique 22, puisque l'axe longitudinal de ce dernier, en position d'utilisation, est sensiblement confondu avec l'axe de changement de pas de la pale considérée.

Les caractéristiques élastiques du ressort de rappel 45 et la masse de la butée mobile 21, réalisée en acier, et en particulier la masse de son anneau 36 et de son bras 37, sont choisies pour que, lorsque la vitesse de rotation du rotor devient supérieure au seuil prédéterminé et augmente progressivement, l'anneau 36 et le bras 37 constituent une masselotte soumise aux effets de la force centrifuge et qui est progressivement escamotée par pivotement et radialement vers l'extérieur, à l'encontre du ressort de rappel 45, de sorte que le jeu entre la zone d'appui à la périphérie du doigt conique 22 et la surface d'appui tronconique 42 à l'intérieur de l'anneau 36 augmente progressivement, en même temps que le régime de rotation du rotor, ce qui autorise des débattements angulaires en battement et traînée d'amplitudes croissantes. Dans cette position, dite position "vol", les butées fixe 20 et mobile 21 limitent l'angle de battement des pales, en réalisant une butée franche. Par contre, dans la position "sol", telle que définie ci-dessus, la butée fixe 20 et la butée mobile 21 forment une butée absolue en battement et traînée.

Ce dispositif de butées, dont l'une est escamotable ou éclipsable en vol sous l'effet de la force centrifuge et à l'encontre d'un ressort de rappel, assure deux fonctions :

- en position "sol", l'ensemble de la pale et de sa partie d'attache fourchue est sensiblement immobilisé, par limitation de ses mouvements de battement et de traînée à des valeurs faibles ou nulles, ce qui protège la butée sphérique lamifiée correspondante des effets du vent sur les pales à l'arrêt ou à faible vitesse de rotation du rotor, et autorise le libre débattement des pales en pas, de façon à permettre la vérification du bon état de fonctionnement du dispositif de commande de pas avant le vol, et sur toute la plage utilisable ;
- en position "vol", la butée franche réalisée et limitant l'angle de battement des pales est nécessaire pour garantir que, même lors de manoeuvres exceptionnelles, la pale correspondante ne pourra pas venir percuter la structure de l'hélicoptère.

A noter également qu'en position "sol", il est inutile de mettre en place des outillages de maintien des pales en position, tels que des bonnettes emmanchées sur les bouts de pales et reliées par des élingues à la structure de l'hélicoptère, pour permettre le stationnement de ce dernier au vent.

On constate ainsi que, selon le régime de rotation, la butée mobile 21, qui forme simultanément, de par sa propre masse, une masselotte soumise aux effets de la force centrifuge pour actionner son basculement autour de l'axe de pivot 49, vient en contact par son anneau 36 sur des parties différentes du doigt conique 22 de la butée fixe. En outre, pour déplacer la zone de contact et de martèlement sur ce doigt conique 22, en cours de vie, il peut être successivement tourné et bloqué dans les différentes positions définies par le dispositif d'indexation précédemment décrit.

Du fait de la disposition des butées fixe 20 et mobile 21 à l'extérieur du mât moyeu intégré 1, le volume interne de ce dernier sous les butées lamifiées sphériques 7 est libéré, de sorte que d'autres organes peuvent y être installés, et en particulier le dispositif de commande du pas général des pales du rotor arrière. Ce dispositif comprend un manchon collectif 56, monté coulissant axialement à l'intérieur du mât moyeu 1, et dont l'extrémité axiale élargie 57, tournée vers les ouvertures 6, présente, pour chaque pale, une chape radiale 58, dans laquelle est articulée l'extrémité axiale interne d'une bielle de commande de pas 59, dont l'extrémité axiale externe est également articulée dans une chape radiale 60 présentée par l'extrémité d'un levier de commande de pas 61 en saillie latérale sur l'armature radiale interne 10 de la butée sphérique lamifiée 7 correspondante. Comme représentés sur la figure 11, la chape 60 et le levier de pas 61 sont d'une seule pièce avec l'armature radiale interne 10, réalisée en aluminium par exemple, pour limiter le poids. Les deux extrémités de chaque bielle de commande de pas 59 sont aménagées en embouts à rotule retenus chacun dans l'une des deux chapes 58 et 60, dont chacune a deux branches parallèles entre elles dans des plans sensiblement radiaux, la chape radiale 60 et le levier de pas 61 étant en saillie par rapport à l'armature 10 du côté du bord de fuite de la pale correspondante.

Ce montage interne du dispositif de commande de pas et du levier de pas sur l'armature radiale interne permet d'assurer une bonne commande du pas collectif des pales, avec de faibles forces de commande, et la disposition interne au mât moyeu tubulaire intégré des butées lamifiées sphériques 7 procure une faible excentration en battement et traînée.

Le manchon 56, interne au mât moyeu 1, peut également contenir un collecteur tournant d'alimentation électrique d'un dégivreur noyé dans chaque pale du rotor arrière, ce qui assure une bonne protection du collecteur comme du manchon, dont la présence n'engendre aucune traînée aérodynamique supplémentaire, et qui peuvent être facilement retirés pour toute opération de maintenance.

Bien que cela n'ait pas été représenté sur les figures 1 et 2, la tête de rotor articulé peut également comporter, pour chaque pale, un amortisseur de traînée, ou contre-fiche de rappel élastique à amortissement incorporé, du type visco élastique ou hydro élastique, pour amortir les mouvements angulaires de la pale correspondante en traînée et la rappeler sur son axe neutre de traînée, cet organe étant externe au mât moyeu 1 et articulé par une extrémité sur le pied de pale et par l'autre extrémité soit sur le moyeu 3, soit sur le pied de la pale adjacente, en formant un tirant interpale.

Dans l'exemple précédemment décrit, le réceptacle de la butée mobile 21, qui est pivoté radialement vers l'intérieur par le ressort de rappel 45, et ainsi engagé autour du doigt 22 de la butée fixe jusqu'à venir pratiquement en contact avec la zone d'appui définie par la surface latérale de ce doigt 22, et qui est pivoté radialement vers l'extérieur sous l'effet de la force centrifuge, et ainsi progressivement dégagé du doigt 22 de sorte que la surface d'appui du réceptacle vienne en contact sur des parties différentes de la zone d'appui sur le doigt 22, selon le régime de rotation du rotor, est un anneau 36, dont la face latérale interne 42 forme la face d'appui, et qui est ouvert dans ses deux faces frontales, correspondant à ses extrémités radiales par rapport à l'axe A du rotor.

Mais le réceptacle de la butée mobile 21 peut avoir d'autres formes, sous réserve qu'il constitue toujours simultanément une masselotte soumise à l'action de la force centrifuge pour entraîner son pivotement vers l'extérieur.

Par exemple, ce réceptacle peut être conformé en fourche, ou encore, comme représenté schématiquement sur la figure 12, en élément cupulaire 63 ou anneau fermé par un fond 64 du côté opposé au doigt tronconique de butée fixe 62, qui, dans cet exemple, est d'une seule pièce avec la pièce 11' de fixation de l'armature radiale externe 9 de la butée sphérique lamifiée 7 correspondante sur la jante 4 du mât moyeu 1. Dans ce cas, la surface d'appui, définie par la surface latérale interne tronconique 65 de la partie annulaire du réceptacle 63, est complétée par la surface interne 66 du fond fermé 64, et l'engagement du réceptacle 63 autour du doigt 62 est limité par la venue de cette surface d'appui complémentaire 66 contre la zone d'appui complémentaire 67 constituée par la surface de la petite base du doigt 62, à son extrémité radiale externe.

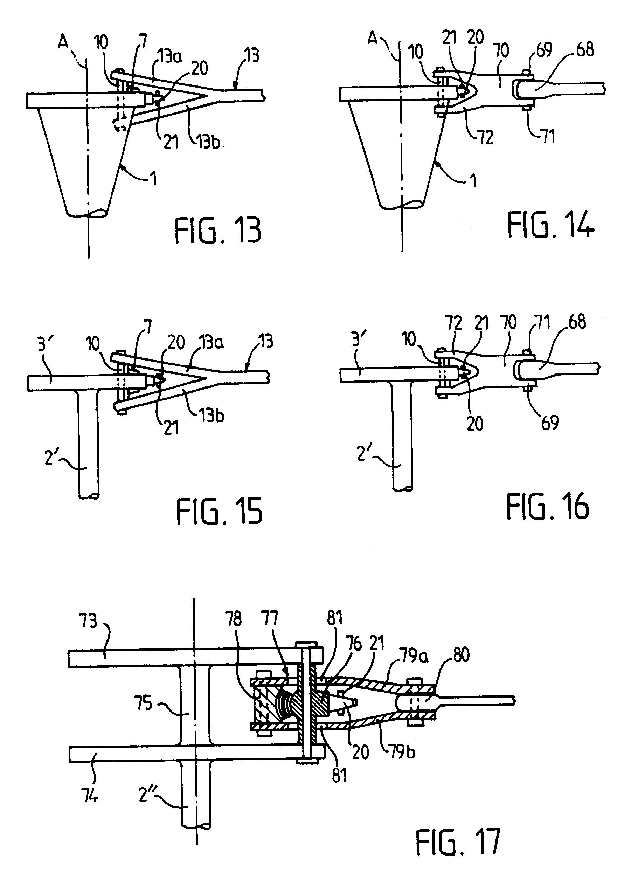

L'utilisation de dispositifs de butées mixtes, en battement et traînée, selon l'invention n'est pas limitée à un rotor arrière à mât moyeu tubulaire intégré 1, auquel chaque pale à pied 13 conformé en partie d'attache fourchue 13a-13b est reliée par une butée sphérique lamifiée 7, dont l'armature interne 10 est solidaire des extrémités radiales internes de la partie fourchue 13, et tel que la butée fixe 21 du dispositif est portée en saillie radiale vers l'extérieur, par rapport à l'armature radiale externe de cette butée lamifiée 7, comme cela est schématiquement représenté sur la figure 13, et correspond à l'exemple de réalisation des figures 1 et 2. Mais il est également possible d'utiliser de tels dispositifs de butées mixtes sur des rotors arrières ou principaux, dont les têtes de rotor sont schématiquement représentées sur les figures 14 à 17.

Sur la figure 14, chaque pale est retenue par son pied 68 dans une chape d'extrémité radiale externe 69 d'un manchon radial 70 de liaison de la pale au mât moyeu tubulaire 1, la retenue du pied de pale 68 dans la chape 69 étant assurée par exemple par deux axes 71 parallèles à l'axe du rotor et dans un même plan transversal à l'axe de pas de la pale correspondante, et dont l'un est amovible pour permettre le repliage de la pale autour de l'autre. Le manchon 70 présente également une chape radiale interne 72 dont une branche pénètre dans le mât moyeu 1 par une ouverture radiale de ce dernier, et dont les deux branches ont leurs extrémités radiales internes fixées à l'armature interne 10 d'une butée lamifiée sphérique en appui, comme dans l'exemple précédent, par son armature externe contre l'intérieur de la jante du mât moyeu 1, la butée fixe 20 du dispositif de butées mixtes étant, comme précédemment, solidaire du mât moyeu et de l'armature externe, et en saillie radiale vers l'extérieur, alors que la butée mobile 21 du dispositif de butées mixtes est montée pivotante entre les deux branches de la chape 72.

La tête de rotor représentée sur la figure 15 ne diffère essentiellement de celle de la figure 13 que par la réalisation du moyeu, comprenant essentiellement un unique plateau radial 3′ solidaire en rotation de l'extrémité supérieure d'un mât rotor 2′. Le plateau 3′ présente, pour chaque pale à pied 13 fourchu (13a-13b) un alvéole ménagé axialement, et dans lequel est logée la butée sphérique lamifiée 7 correspondante. Comme précédemment, l'armature interne 10 de cette dernière, traversant l'alvéole, est fixée aux extrémités internes des branches 13a et 13b du pied de pale 13, tandis que l'armature externe de la butée lamifiée 7 prend appui contre le bord radial externe de l'alvéole et est fixée sur la partie correspondante du plateau, par exemple à l'aide d'une pièce de fixation portant, en saillie radiale vers l'extérieur, la butée fixe 20 du dispositif de butée mixte selon l'invention. Comme dans l'exemple de la figure 13, la butée mobile 21 de ce dispositif pivote entre les branches 13a et 13b du pied de pale 13.

La tête de rotor schématisée sur la figure 16 ne se distingue de celle de la figure 15 que par le remplacement de la partie d'attache fourchue (13a-13b) intégrée au pied de la pale 13 par un manchon radial de liaison 70, tel que décrit en référence à la figure 14, et coopérant de la même manière, d'une part, avec le pied de pale 68, et d'autre part, avec l'armature interne 10 de la butée lamifiée sphérique correspondante, respectivement par sa chape externe 69 et par sa chape interne 72.

Enfin, sur la figure 17, la tête de rotor comporte deux plateaux radiaux 73 et 74, superposés et axialement espacés l'un de l'autre, qui sont rigidement fixés à un fût central 75 les reliant l'un à l'autre, et solidaires en rotation de l'extrémité supérieure d'un mât rotor 2″. Pour chaque pale, les deux plateaux radiaux 73 et 74 présentent des parties en regard, et entre les bords radiaux externes desquels est fixée en entretoise une armature radiale externe 76, d'une butée sphérique lamifiée 77 d'articulation de la pale correspondante sur le moyeu. L'armature interne 78 de cette butée lamifiée 77 est fixée entre les extrémités radiales internes des deux branches 79a et 79b d'une chape double retenant, entre ses extrémités radiales externes, le pied 80 de la pale correspondante, les deux branches 79a et 79b de la chape double présentant de plus des ouvertures 81 traversées par des parties de l'armature externe 76 permettant sa fixation aux plateaux 73 et 74 du moyeu. Dans cette réalisation, la butée fixe 20 du dispositif de butées mixtes peut être directement portée en saillie radiale externe par l'armature externe 76, la butée mobile 21 étant montée pivotante entre les deux branches 79a et 79b de la chape double.

On comprend que le dispositif de butées mixtes de battement et traînée ci-dessus décrit, dont les principaux avantages sont qu'il est simple et léger, peu sujet aux blocages, sans conséquences notables en cas de mauvais fonctionnement, et assure les fonctions en positions "sol" et "vol" avec les mêmes organes, en autorisant le contrôle du libre débattement de la commande de pas avant la mise en rotation du rotor, permet de réaliser des butées de battement et traînée précises et performantes, pour des rotors dont les axes de battement et de traînée ne sont pas matérialisés, comme cela est le cas pour les rotors dont les pales sont articulées sur les moyeux par des butées lamifiées sphériques. En outre, ce dispositif s'intègre bien dans l'architecture des moyeux de ces rotors, puisque les butées fixe et mobile du dispositif se logent, comme ces butées lamifiées sphériques, dans la partie d'attache fourchue de la pale ou d'un manchon de liaison de la pale au moyeu.

## Revendications

1. Dispositif de butées pour les pales d'un rotor articulé de giravion comprenant un moyeu de rotor (3) solidaire en rotation d'un mât rotor (2) autour d'un axe de rotation du rotor (A) et auquel chacune des pales est reliée par des moyens (7) de retenue et d'articulation, qui comprennent au moins deux armatures dont l'une (9) en position radiale externe par rapport à l'autre (10), est rigidement fixée sur le moyeu (3), tandis que l'autre armature (10), en position radiale interne, est solidaire en mouvement du pied de la pale correspondante par l'intermédiaire d'une partie fourchue (13) d'attache de la pale au moyeu (3), le dispositif de butées de battement et de traînée comprenant, pour chaque pale, deux butées dont une première (20) est fixe par rapport au moyeu (3) et comporte un organe de butée (22), en saillie radiale vers l'extérieur par rapport à ladite armature radiale externe (9) et présentant au moins une zone d'appui (25, 26) définie par au moins une partie d'une surface de révolution autour d'un axe longitudinal dudit organe de butée (22) qui est sensiblement radial et confondu avec l'axe de pas (X-X) de la pale correspondante, et ladite butée fixe (20) coopère avec la seconde butée (21), montée mobile sur l'ensemble formé par ladite pale et ladite partie d'attache (13), et comportant un organe de butée (36) présentant au moins une surface d'appui (42) définie par au moins une partie d'une surface de révolution autour de l'axe longitudinal dudit organe de butée (22) de ladite butée fixe (20), lorsque la butée mobile (21) est en position de coopération avec la butée fixe (20), ladite butée mobile (21) étant escamotable sous l'effet de la force centrifuge à l'encontre de moyens de rappel élastique (45), qui, lorsque la vitesse de rotation du rotor est inférieure à un seuil donné, rappellent la butée mobile (21) vers la butée fixe (20), dans une position de coopération dans laquelle au moins une surface d'appui (42) de l'organe de butée (36) de la butée mobile (21) est disposée directement en regard et à proximité immédiate d'au moins une zone d'appui (25, 26) dudit organe de butée (22) de ladite butée fixe (20), de façon à limiter à des valeurs faibles ou nulles les mouvements angulaires de la pale en battement, d'un côté au moins du plan de rotation des pales ainsi qu'en traînée, de part et d'autre de l'axe longitudinal (X-X) de la pale, par contact d'au moins une surface d'appui (42) de la butée mobile (21) contre au moins une zone d'appui (25, 26) de la butée fixe (20), tandis que la butée mobile (21) est escamotée vis-à-vis de la butée fixe (20) lorsque ladite vitesse de rotation est supérieure audit seuil, afin de permettre des mouvements angulaires de ladite pale en battement d'un côté au moins du plan de rotation des pales, et en traînée, de part et d'autre de l'axe longitudinal (X-X) de la pale, caractérisé en ce que ledit organe de butée (22) de la butée fixe (20) a la forme d'un doigt convergent radialement vers l'extérieur, la butée mobile (21) est montée sur ledit ensemble pale-partie d'attache (13) par une articulation à pivotement autour d'un axe de pivot (49) sensiblement parallèle à l'axe de rotation (A) du rotor et décalé latéralement par rapport à l'axe de pas (X-X) de la pale correspondante, et ledit organe de butée (36) de la butée mobile (21) est conformé en réceptacle dont au moins une surface interne (42) délimite une surface d'appui, et qui est rappelé par pivotement sensiblement radialement vers l'intérieur par lesdits moyens de rappel élastique (45), en position d'engagement autour du doigt convergent (22), de sorte qu'aux vitesses de rotation inférieures au seuil donné, chaque surface d'appui (42) du réceptacle (36) est sensiblement en contact avec une zone d'appui correspondante (25) sur la périphérie du doigt convergent (22), afin de former une butée absolue en battement d'un côté et/ou de l'autre du plan de rotation des pales et en traînée vers l'arrière et/ou vers l'avant par rapport au sens de rotation du rotor, et que, pour une vitesse de rotation supérieure audit seuil et progressivement croissante, ledit réceptacle (36) est pivoté radialement vers l'extérieur contre les moyens de rappel et progressivement dégagé du doigt convergent (22) de façon à délimiter entre chaque surface d'appui (42) du réceptacle (36) et une zone d'appui correspondante (25, 26) du doigt convergent (22), un jeu progressivement croissant permettant des débattements angulaires progressivement croissants de la pale correspondante en battement et en traînée, afin de former une butée franche en vol, pour les mouvements de battement et traînée de la pale.

2. Dispositif selon la revendication 1, caractérisé en ce qu'au moins une partie de la surface périphérique du doigt convergent (22) est une surface sensiblement tronconique (25, 26) formant une zone d'appui continue, et ledit réceptacle (36) présente une surface interne de forme également sensiblement tronconique (42) en regard et sensiblement en contact avec la surface sensiblement tronconique (25, 26) du doigt convergent (22) en position d'engagement du réceptacle (36) sur le doigt (22).

3. Dispositif selon la revendication 2, caractérisé en ce que l'angle au sommet de la surface d'appui sensiblement tronconique (42) du réceptacle (36) est inférieur à l'angle au sommet de la zone sensiblement tronconique d'appui (25, 26) du doigt convergent (22).

4. Dispositif selon l'une des revendications 1 à 3, caractérisé en ce que ledit réceptacle (36) comporte une partie annulaire dont la face latérale interne forme une unique surface d'appui continue (42) de la butée mobile (21).

5. Dispositif selon la revendication 4, caractérisé en ce que le réceptacle (63) comporte un fond (64) fermant la partie annulaire du côté de son extrémité radiale externe par rapport à l'axe (A) du rotor, et limitant l'engagement du réceptacle (63) autour du doigt convergent (62), par contact avec l'extrémité radiale externe (67) dudit doigt convergent (62).

6. Dispositif selon la revendication 4, caractérisé en ce que le réceptacle est un anneau (36) ouvert à ses deux extrémités radiales par rapport à l'axe (A) du rotor, et s'emmanchant autour du doigt convergent (22).

7. Dispositif selon l'une des revendications 1 à 6, caractérisé en ce que ledit réceptacle (36) est d'une masse déterminée pour qu'il constitue simultanément une masselotte escamotée radialement vers l'extérieur, à l'encontre des moyens de rappel élastique (45), dès que la vitesse du rotor est supérieure audit seuil donné.

8. Dispositif selon l'une des revendications 1 à 7, caractérisé en ce que l'axe de pivot (49) de la butée mobile (21) est monté dans une chape (50a, 50b) d'une pièce support (50) fixée sur l'ensemble pale-partie d'attache fourchue (13), et de préférence rapportée de manière amovible dans la partie d'attache fourchue (13) de la pale.

9. Dispositif selon l'une des revendications 1 à 8, caractérisé en ce que ledit réceptacle (36) est supporté par un bras (37) en saillie latérale vers l'extérieur sur un manchon (38) monté tourillonnant autour de l'axe de pivot (49).

10. Dispositif selon la revendication 9, caractérisé en ce que les moyens de rappel élastique comprennent au moins un ressort de torsion (45) entourant ledit manchon (38) et prenant appui, d'une part, contre une première butée fixe (53) de l'ensemble pale-partie d'attache (13), et, d'autre part, sur ledit bras (37) pour faire pivoter ledit réceptacle (36) vers ledit doigt convergent (22).

11. Dispositif selon l'une des revendications 9 et 10, caractérisé en ce que la butée mobile (11) comporte également un ergot (43), qui est appliqué, sous l'effet des moyens de rappel élastique (45), contre une seconde butée fixe (54) de l'ensemble pale-partie d'attache (13), lorsque la vitesse de rotation du rotor est inférieure audit seuil donné, afin de limiter le pivotement radialement vers l'intérieur de la butée mobile (11), de façon à laisser subsister un faible jeu entre la surface d'appui (42) de la butée mobile (11) et la zone d'appui (25, 26) de la butée fixe (20), en position de coopération des butées.

12. Dispositif selon la revendication 11 telle que rattachée à la revendication 8, caractérisé en ce que ladite seconde butée fixe de l'ensemble pale-partie d'attache (13) est formée par une surface de butée (54) délimitée sur une nervure (55) de ladite pièce support (50) de l'articulation de la butée mobile (21) sur l'ensemble pale-partie d'attache (13).

13. Dispositif selon l'une des revendications 10 à 12, caractérisé en ce que le manchon (38) de la butée mobile (11) comporte une partie centrale (39) supportant le bras (37) et deux parties d'extrémités cylindriques (40a, 40b) dont chacune est entourée par l'une respectivement de deux parties hélicoïdales (46a, 46b) d'un ressort de torsion (45), sur lequel l'extrémité de chaque partie hélicoïdale située du côté de l'autre partie hélicoïdale est conformée en languettes (47a, 47b) d'appui contre le bras (37) de la butée mobile (11), tandis que les extrémités opposées des deux parties hélicoïdales (46a, 46b) sont reliées l'une à l'autre et forment un arceau (48) en appui sur ladite première butée fixe (53) de l'ensemble pale-partie d'attache (13).

14. Dispositif selon l'une des revendications 1 à 13, caractérisé en ce que le doigt convergent (22) de la butée fixe (20) est monté sur un axe support (23) central et radial, qui est solidaire du moyeu (3), et autour duquel le doigt convergent (22) peut prendre plusieurs positions de travail et être bloqué dans chacune de ces positions.

15. Dispositif selon la revendication 14, caractérisé en ce que ledit axe support central (23) de la butée fixe (20) est fixé à ladite armature radiale externe (9), coaxialement à l'axe de pas (X-X) de la pale correspondante, et le positionnement et le blocage du doigt convergent (22) autour de l'axe support (23) sont assurés par un dispositif d'indexation en rotation autour dudit axe de pas (X-X).

16. Dispositif selon la revendication 15, caractérisé en ce que ledit axe support (23) est fileté à son extrémité radiale externe et d'une seule pièce par son extrémité radiale interne avec une portée cylindrique coaxiale (24) présentée en saillie radiale vers l'extérieur par une pièce de fixation (11) de l'armature radiale externe (9) sur le moyeu (3), de sorte que le doigt convergent (22) de la butée fixe (20) est emmanché et retenu sur l'axe support (23) par appui d'un épaulement interne (31) dudit doigt (22) contre un épaulement de raccordement de l'axe support (23) à la portée cylindrique (24), et par un écrou (34) vissé sur l'extrémité filetée de l'axe support (23), le dispositif d'indexation comprenant une broche transversale (35) montée dans ladite portée cylindrique (24) et dont au moins une extrémité fait saillie par rapport à la surface latérale de ladite portée cylindrique (24) et est engagée dans l'une de plusieurs encoches (33) ménagées dans une portion dudit doigt (22) qui entoure ladite portée cylindrique (24) afin de bloquer ledit doigt (22) dans la position correspondante en rotation autour de l'axe support (23).

17. Dispositif selon l'une des revendications 1 à 16, caractérisé en ce que ledit doigt convergent (22) de la butée fixe (20) comporte une âme (27) en un matériau rigide entourée d'un revêtement en élastomère (28) de protection contre le martèlement par la butée mobile (21).

18. Tête de rotor articulé de giravion, du type comprenant un moyeu de rotor (3) solidaire en rotation d'un mât rotor (2) autour d'un axe de rotation du rotor (A), et auquel chacune des pales du rotor est reliée par une partie d'attache fourchue (13) à deux branches (13a, 13b), et par des moyens de retenue et d'articulation (7) sur le moyeu (3) qui comprennent une armature radiale externe (9) fixée sur le moyeu (3), et une armature radiale interne (10) fixée aux extrémités radiales internes des deux branches (13a, 13b) de la partie d'attache fourchue correspondante (13), caractérisée en ce qu'elle comprend, pour chaque pale, un dispositif de butées (20, 21) selon l'une des revendications 1 à 17 précédentes, et des moyens de retenue et d'articulation comportant une butée lamifiée sphérique (8) intégrée entre les deux armatures correspondantes (9, 10) et logée entre les deux branches (13a, 13b) de la partie d'attache fourchue (13) correspondante, de sorte que son centre de rotation soit sensiblement situé du côté de l'armature radiale externe (9).

19. Tête de rotor selon la revendication 18, caractérisée en ce que, pour chaque pale, l'armature radiale interne (10) correspondante présente, dans ses faces axiales opposées, des évidements d'encastrement (10a, 10b) des extrémités radiales internes des branches (13a, 13b) de la partie d'attache fourchue (13) auxquelles l'armature radiale interne (10) est directement attachée par une unique broche (15) d'axe (14) sensiblement parallèle à l'axe de rotation (A) du rotor.

20. Tête de rotor selon l'une des revendications 18 et 19, caractérisée en ce qu'elle comprend, pour chaque pale, un levier de commande de pas (61) d'une seule pièce avec l'armature radiale interne (10) correspondante, et en saillie latérale par rapport à cette dernière, le levier de commande de pas (61) présentant une chape radiale (60) dans laquelle est articulée une extrémité d'une bielle de commande de pas (59) dont l'autre extrémité est articulée à un dispositif de commande de pas (56, 57, 58).

21. Tête de rotor selon l'une des revendications 18 à 20, caractérisée en ce que la partie d'attache fourchue (13) de chaque pale est intégrée au pied de pale.

22. Tête de rotor selon l'une des revendications 18 à 20, caractérisée en ce que la partie d'attache fourchue de chaque pale est un organe de liaison sensiblement radial (70), tel qu'un manchon, conformé à son extrémité radiale interne en chape (72) dont les deux branches sont fixées à l'armature radiale interne (10) des moyens de retenue et d'articulation correspondants, et conformé à son extrémité radiale externe en chape (69) de fixation au pied de la pale (68) correspondante par deux axes (71) sensiblement parallèles à l'axe de rotation (A) du rotor, et dont l'un est éventuellement amovible afin de permettre le repliage de la pale par pivotement autour de l'autre axe (71).

23. Tête de rotor selon l'une des revendications 18 à 22, caractérisée en ce que le moyeu comprend deux plateaux radiaux (73, 74) superposés et espacés axialement l'un de l'autre, et entre les bords desquels l'armature radiale externe (76) des moyens de retenue et d'articulation (77) de chaque pale est montée en entretoise et traverse des évidements (81) ménagés dans les deux branches (79a, 79b) de la partie d'attache fourchue correspondante.

24. Tête de rotor selon l'une des revendications 18 à 22, caractérisée en ce que le moyeu comprend un plateau radial (3') percé, pour chaque pale, d'un alvéole dans lequel sont au moins partiellement logés les moyens de retenue et d'articulation correspondants (7), dont l'armature radiale externe est retenue contre le bord externe de l'alvéole et sur la partie périphérique correspondante du plateau (3').

25. Tête de rotor selon l'une des revendications 18 à 22, caractérisée en ce que le moyeu (3) et le mât rotor (2) sont réalisés sous la forme d'un mât moyeu tubulaire intégré (1), percé, pour chaque pale, d'au moins une ouverture (6) traversée par l'une (13b) des branches (13a, 13b) de la partie d'attache fourchue (13) correspondante, et à l'intérieur duquel sont au moins partiellement logés les moyens de retenue et d'articulation (7) correspondants, fixés en appui par leur armature radiale externe (9) contre une partie (4) de la face interne du mât moyeu tubulaire intégré (1).

26. Tête de rotor selon la revendication 25, pour rotor arrière d'hélicoptère, caractérisée en ce que le mât moyeu tubulaire intégré (1) est de forme sensiblement tronconique et destiné à être solidarisé en rotation, du côté de sa petite base (2), à l'arbre de sortie d'une boîte de transmission auxiliaire de l'hélicoptère, le mât moyeu tubulaire intégré (1) enveloppant un dispositif de commande du pas général des pales du rotor arrière comprenant un manchon collectif (56) monté axialement coulissant à l'intérieur du mât moyeu tubulaire (1), et dont la partie d'extrémité axiale (57) tournée vers la grande base du mât moyeu (1) porte, pour chaque pale, une chape radiale (58) dans laquelle est articulée une extrémité d'une bielle de commande de pas correspondante (59).

27. Tête de rotor selon l'une des revendications 24 à 26, caractérisée en ce que, pour chaque pale, l'armature radiale externe (9) des moyens de retenue et d'articulation correspondants (7) est conformée, radialement vers l'extérieur, en étrier (9a, 9b) qui chevauche une partie correspondante (4) du moyeu (3) sur laquelle ladite armature est fixée à l'aide d'une pièce de fixation (11) conformée en étrier (11a, 11b) radialement vers l'intérieur, chevauchant également la partie correspondante (4) du moyeu (3), et portant la butée fixe (20) du dispositif de butées (20, 21).

## Claims

1. Stops device for the blades of a rotorcraft articulated rotor comprising a rotor hub (3) securely fastened in rotation to a rotor mast (2) about a rotational axis of the rotor (A) and to which each of the blades is connected by retaining and articulation means (7), which comprise at least two armatures one (9) of which, in the external radial position with respect to the other (10), is securely fixed to the hub (3), whilst the other armature (10), in an internal radial position, is securely fastened in movement to the foot of the corresponding blade by the intermediary of a forked portion (13) for attaching the blade to the hub (3), the flapping and drag stops device comprising, for each blade, two stops a first (20) of which is fixed with respect to the hub (3) and comprises a stop member (22), projecting radially towards the outside with respect to the said external radial armature (9) and having at least one bearing zone (25, 26) defined by at least a portion of a surface of revolution about a longitudinal axis of the said stop member (22) which is substantially radial and coincident with the pitch axis (X-X) of the corresponding blade, and the said fixed stop (20) interacts with the second stop (21), mounted movably on the assembly formed by the said blade and the said attachment portion (13), and comprising a stop member (36) having at least one bearing surface (42) defined by at least one portion of a surface of revolution about the longitudinal axis of the said stop member (22) of the said fixed stop (20), when the movable stop (21) is in the interaction position with the fixed stop (20), the said movable stop (21) being retractable under the effect of centrifugal force against elastic return means (45), which, when the rotational speed of the rotor is below a given threshold, return the movable stop (21) towards the fixed stop (20), in an interaction position in which at least one bearing surface (42) of the stop member (36) of the movable stop (21) is arranged directly facing and in immediate proximity of at least one bearing zone (25, 26) of the said stop member (22) of the said fixed stop (20), so as to limit the angular movements of the flapping blade to low or zero values, on at least one side of the plane of rotation of the blades as well as in drag, on either side of the longitudinal axis (X-X) of the blade, through contact of at least one bearing surface (42) of the movable stop (21) against at least one bearing zone (25, 26) of the fixed stop (20), whilst the movable stop (21) is retracted with respect to the fixed stop (20) when the said rotational speed is greater than the said threshold, in order to allow angular movements of the said flapping blade, on at least one side of the plane of rotation of the blades, and in drag, on either side of the longitudinal axis (X-X) of the blade, characterised in that the said stop member (22) of the fixed stop (20) has the shape of a finger converging radially towards the outside, the movable stop (21) is mounted on the said blade/attachment portion (13) assembly by an articulation with pivoting about a pivoting pin (49) substantially parallel to the rotational axis (A) of the rotor and laterally offset with respect to the pitch axis (X-X) of the corresponding blade, and the said stop member (36) of the movable stop (21) is shaped as a receptacle, at least one internal surface (42) of which delimits a bearing surface, and which is returned by substantially radial pivoting towards the inside by the said elastic return means (45), in the engagement position about the convergent finger (22), so that at rotational speeds below the given threshold, each bearing surface (42) of the receptacle (36) is substantially in contact with a corresponding bearing zone (25) on the periphery of the convergent finger (22), in order to form an absolute stop in flapping on one side and/or on the other side of the plane of rotation of the blades and in drag towards the rear and/or towards the front with respect to the direction of rotation of the rotor, and that, for a rotational speed above the said threshold and progressively increasing, the said receptacle (36) is radially pivoted towards the outside against the return means and is progressively disengaged from the convergent finger (22) so as to delimit between each bearing surface (42) of the receptacle (36) and a corresponding bearing zone (25, 26) of the convergent finger (22), a progressively increasing clearance allowing progressively increasing angular deflections of the corresponding blade in flapping and in drag, in order to form a stop which is free in flight, for the flapping and drag movements of the blade.

2. Device according to Claim 1, characterised in that at least one portion of the peripheral surface of the convergent finger (22) is a substantially frustoconical surface (25, 26) forming a continuous bearing zone, and the said receptacle (36) has an internal surface also of substantially frustoconical shape (42) facing and substantially in contact with the substantially frustoconical surface (25, 26) of the convergent finger (22) in the engagement position of the receptacle (36) on the finger (22).

3. Device according to Claim 2, characterised in that the apex angle of the substantially frustoconical bearing surface (42) of the receptacle (36) is less than the apex angle of the substantially frustoconical bearing zone (25, 26) of the convergent finger (22).

4. Device according to one of Claims 1 to 3, characterised in that the said receptacle (36) comprises an annular portion whose internal lateral face forms a single continuous bearing surface (42) of the movable stop (21).

5. Device according to Claim 4, characterised in that the receptacle (63) comprises a bottom (64) closing the annular portion on the side of its external radial end with respect to the axis (A) of the rotor, and limiting the engagement of the receptacle (63) about the convergent finger (62), through contact with the external radial end (67) of the said convergent finger (62).

6. Device according to Claim 4, characterised in that the receptacle is an annulus (36) open at its two radial ends with respect to the axis (A) of the rotor, and fitting around the convergent finger (22).

7. Device according to one of Claims 1 to 6, characterised in that the said receptacle (36) is of a determined mass so that it simultaneously constitutes a governor weight which is radially retracted towards the outside, against elastic return means (45), as soon as the rotor speed is above the said given threshold.

8. Device according to one of Claims 1 to 7, characterised in that the pivot pin (49) of the movable stop (21) is mounted in a clevis (50a, 50b) of a support piece (50) fixed on the blade/forked attachment portion (13) assembly, and preferably attached in a removable manner in the forked attachment portion (13) of the blade.

9. Device according to one of Claims 1 to 8, characterised in that the said receptacle (36) is supported by an arm (37) projecting laterally towards the outside on a sleeve (38) mounted so as to swing about the pivot pin (49).

10. Device according to Claim 9, characterised in that the elastic return means comprise at least one torsion spring (45) surrounding the said sleeve (38) and bearing, on the one hand, against a first fixed stop (53) of the blade/attachment portion (13) assembly and, on the other hand, on the said arm (37) to cause the said receptacle (36) to pivot towards the said convergent finger (22).

11. Device according to one of Claims 9 and 10, characterised in that the movable stop (21) also comprises a stud (43), which is applied, under the effect of the elastic return means (45), against a second fixed stop (54) of the blade/attachment portion (13) assembly, when the rotational speed of the rotor is below the said given threshold, in order to limit the radial pivoting towards the inside of the movable stop (21), so as to leave a small clearance between the bearing surface (42) of the movable stop (21) and the bearing zone (25, 26) of the fixed stop (20), in the interaction position of the stops.

12. Device according to Claim 11 such as attached to Claim 8, characterised in that the said second fixed stop of the blade/attachment portion (13) assembly is formed by a stop surface (54) delimited on a rib (55) of the said support piece (50) of the articulation of the movable stop (21) on the blade/attachment portion (13) assembly.

13. Device according to one of Claims 10 to 12, characterised in that the sleeve (38) of the movable stop (21) comprises a central portion (39) supporting the arm (37) and two cylindrical end portions (40a, 40b), each of which is surrounded respectively by one of the two helical portions (46a, 46b) of a torsion spring (45), on which the end of each helical portion situated on the side of the other helical portion is shaped into tabs (47a, 47b) for bearing against the arm (37) of the movable stop (21), whilst the opposite ends of the two helical portions (46a, 46b) are connected to each other and form a bow (48) bearing on the said first fixed stop (53) of the blade/attachment portion (13) assembly.

14. Device according to one of Claims 1 to 13, characterised in that the convergent finger (22) of the fixed stop (22) is mounted on a central and radial support pin (23), which is securely fastened to the hub (3), and about which the convergent finger (22) can assume several working positions and be locked in each of these positions.

15. Device according to Claim 14, characterised in that the said central support pin (23) of the fixed stop (20) is fixed to the said external radial armature (9), coaxially with the pitch axis (X-X) of the corresponding blade, and the positioning and locking of the convergent finger (22) about the support pin (23) are provided by an indexing device rotating about the said pitch axis (X-X).

16. Device according to Claim 15, characterised in that the said support pin (23) is threaded at its external radial end and is of one piece at its internal radial end with a coaxial cylindrical bearing surface (24) which projects radially towards the outside via a fixing piece (11) of the external radial armature (9) on the hub (3), so that the convergent finger (22) of the fixed stop (20) is fitted and retained on the support pin (23) by the bearing of an internal shoulder (31) of the said finger (22) against a connecting shoulder of the support pin (23) on the cylindrical bearing surface (24), and by a nut (34) screwed on the threaded end of the support pin (23), the indexing device comprising a transverse spindle (35) mounted in the said cylindrical bearing surface (24) and at least one end of which projects with respect to the lateral surface of the said cylindrical bearing surface (24) and is engaged in one of several notches (33) made in a portion of the said finger (22) which surrounds the said cylindrical bearing surface (24) in order to lock the said finger (22) in the corresponding position in rotation about the support pin (23).

17. Device according to one of Claims 1 to 16, characterised in that the said convergent finger (22) of the fixed stop (20) comprises a core (27) made from a rigid material surrounded by an elastomer covering (28) for protection against hammering by the movable stop (21).

18. Articulated rotor head of a rotorcraft, of the type comprising a rotor hub (3) securely fastened in rotation to a rotor mast (2) about a rotational axis of the rotor (A), and to which each of the blades of the rotor is connected by a forked attachment portion (13) with two branches (13a, 13b), and by retaining and articulation means (7) on the hub (3) which means comprise an external radial armature (9) fixed on the hub (3), and an internal radial armature (10) fixed to the internal radial ends of the two branches (13a, 13b) of the corresponding forked attachment portion (13), characterised in that it comprises, for each blade, a stops device (20, 21) according to one of the preceding Claims 1 to 17, and retention and articulation means comprising a spherical laminated stop (8) integrated between the two corresponding armatures (9, 10) and housed between the two branches (13a, 13b) of the corresponding forked attachment portion (13), so that its centre of rotation is substantially situated on the side of the external radial armature (9).

19. Rotor head according to Claim 18, characterised in that, for each blade, the corresponding internal radial armature (10) has, in its opposite axial faces, embedding recesses (10a, 10b) for the internal radial ends of the branches (13a, 13b) of the forked attachment portion (13) to which the internal radial armature (10) is directly attached by a single spindle (15) having an axis (14) substantially parallel to the rotational axis (A) of the rotor.

20. Rotor head according to one of Claims 18 and 19, characterised in that it comprises, for each blade, a pitch control lever (61) of one piece with the corresponding internal radial armature (10), and laterally projecting with respect to the latter, the pitch control lever (61) having a radial clevis (60) in which there is articulated one end of a pitch control connecting rod (59), the other end of which is articulated to a pitch control device (56, 57, 58).

21. Rotor head according to one of Claims 18 to 20, characterised in that the forked attachment portion (13) of each blade is integrated with the foot of the blade.

22. Rotor head according to one of Claims 18 to 20, characterised in that the forked attachment portion of each blade is a substantially radial linking member (70), such as a sleeve, shaped at its internal radial-end into a clevis (72), the two branches of which are fixed to the internal radial armature (10) of the corresponding articulation and retention means, and shaped at its external radial end as a clevis (69) for fixing to the foot of the corresponding blade (68) via two pins (71) substantially parallel to the rotational axis (A) of the rotor, and one of which is possibly removable in order to allow the folding of the blade by pivoting about the other pin (71).

23. Rotor head according to one of Claims 18 to 22, characterised in that the hub comprises two radial plates (73, 74) superposed and axially spaced from each other, and between the edges of which the external radial armature (76) of the articulation and retention means (77) of each blade is mounted as a brace and traverses the recesses (81) made in the two branches (79a, 79b) of the corresponding forked attachment portion.

24. Rotor head according to one of Claims 18 to 22, characterised in that the hub comprises a radial plate (3') pierced, for each blade, by a cell in which there are at least partially housed the corresponding articulation and retention means (7), the external radial armature of which is retained against the external edge of the cell and on the corresponding peripheral portion of the plate (3').

25. Rotor head according to one of Claims 18 to 22, characterised in that the hub (3) and the rotor mast (2) are produced in the shape of an integrated tubular mast hub (1), pierced, for each blade, with at least one opening (6) traversed by one (13b) of the branches (13a, 13b) of the corresponding forked attachment portion (13), and inside which there are at least partially housed the corresponding articulation and retention means (7), fixed so as to bear via their external radial armature (9) against a portion (4) of the internal face of the integrated tubular mast hub (1).

26. Rotor head according to Claim 25, for the rear rotor of a helicopter, characterised in that the integrated tubular mast hub (1) is of substantially frustoconical shape and intended to be securely fastened in rotation, on the side of its small base (2), to the output shaft of an auxiliary helicopter transmission box, the integrated tubular mast hub (1) encasing a control device for the general pitch of the rear rotor blades comprising a collective sleeve (56) slidably mounted axially inside the tubular mast hub (1), and the axial end portion (57) of which turned towards the large base of the mast hub (1) carries, for each blade, a radial clevis (58) in which there is articulated one end of a corresponding pitch control connecting rod (59).

27. Rotor head according to one of Claims 24 to 26, characterised in that, for each blade, the external radial armature (9) of the corresponding articulation and retention means (7) is shaped, radially towards the outside, as a stirrup piece (9a, 9b) which straddles a corresponding portion (4) of the hub (3) to which the said armature is fixed by means of a fixing piece (11) shaped as a stirrup piece (11a, 11b) radially towards the inside, also straddling the corresponding portion (4) of the hub (3), and carrying the fixed stop (20) of the stops device (20, 21).

**Patentansprüche**

1. Vorrichtung, die Anschläge für die Rotorblätter eines angelenkten Rotors bei einem Drehflügelflugzeug bildet, der eine drehfest mit einem Rotormast (2) verbundene Rotornabe (3) zur Drehung um eine Drehachse (A) des Rotors aufweist, womit jedes der Rotorblätter durch Mittel (7) zur Halterung und Anlenkung verbunden ist, die wenigstens zwei Lagerteile umfassen, von denen das eine (9) in radial äußerer Stellung bezüglich des anderen (10) starr mit der Nabe (3) verbunden ist, während das andere Lagerteil (10) in radial innerer Stellung bewegungsschlüssig mit der Blattwurzel des entsprechenden Rotorblattes über ein gegabeltes Koppelteil (13) für den Anschluß des Rotorblattes an der Nabe (3) verbunden ist, wobei die Vorrichtung mit Anschlägen für die Schwenkauslenkung für jedes Rotorblatt zwei Anschläge aufweist, wovon ein erster (20) bezüglich der Nabe (3) ortsfest ist und ein Anschlagelement (22) aufweist, das radial bezüglich des radial äußeren Lagerteils (9) vorsteht und wenigstens eine Abstützzone (25, 26) aufweist, die durch wenigstens einen Teil einer Oberfläche gebildet ist, die rotationssymmetrisch um eine Längsachse des Anschlagelements (22) ist, welche im wesentlichen radial ist und mit der Schlagachse (X-X) des entsprechenden Rotorblattes übereinstimmt, wobei dieser feste Anschlag (20) mit dem zweiten Anschlag (21) zusammenwirkt, welcher beweglich an der Baugruppe angebracht ist, die durch das Rotorblatt und das Koppelteil (13) gebildet ist, sowie ein Anschlagelement (36) aufweist, das wenigstens eine Abstützfläche (42) aufweist, die durch wenigstens einen Teil einer Oberfläche gebildet ist, die rotationssymmetrisch um die Längsachse dieses Anschlagelementes (22) des festen Anschlages (20) ist, wenn der bewegliche Anschlag (21) sich in einer Stellung zum Zusammenwirken mit dem festen Anschlag (20) befindet, wobei der bewegliche Anschlag (21) unter der Wirkung der Zentrifugalkraft sowie entgegen elastischen Rückholmitteln (45) einfahrbar ist, die bei einer unter einem gegebenen Schwellwert liegenden Drehgeschwindigkeit des Rotors den beweglichen Anschlag (21) gegen den festen Anschlag (20) in eine Stellung zurückbringen, in welcher ein Zusammenwirken stattfindet und wenigstens eine Abstützfläche (42) des Anschlagelements (36) des beweglichen Anschlages (21) direkt in Gegenüberstellung und in unmittelbare Nähe zu wenigstens einer Abstützzone (25, 26) des Anschlagelements (22) des festen Anschlags (20) gebracht ist, so daß die Schlag-Winkelbewegungen des Rotorblattes auf wenigstens einer Seite der Rotationsebene der Rotorblätter ebenso wie seine Schwenkbewegungen beiderseits der Längsachse (X-X) des Rotorblattes auf kleine oder verschwindende Werte reduziert werden, indem wenigstens eine Abstützfläche (42) des beweglichen Anschlages (21) mit wenigstens einer Abstützzone (25, 26) des festen Anschlags (20) in Berührung kommt, während der bewegliche Anschlag (21) in bezug auf den festen Anschlag (20) eingefahren ist, wenn die genannte Drehgeschwindigkeit den Schwellwert überschreitet, um Schlag-Winkelbewegungen des Rotorblattes auf wenigstens einer Seite der Rotationsebene der Rotorblätter und Schwenkbewegungen beiderseits der Längsachse (X-X) des Rotorblattes zuzulassen, dadurch gekennzeichnet, daß das Anschlagelement (22) des festen Anschlages (20) die Form eines Fingers aufweist, der radial nach außen konvergiert, wobei der bewegliche Anschlag (21) an der aus Rotorblatt und Koppelteil (13) bestehenden Baugruppe mittels eines Schwenkgelenkes angebracht ist, das eine Verschwenkung um eine Schwenkachse (49) zuläßt, die im wesentlichen parallel zur Drehachse (A) des Rotors und seitlich in bezug auf die Schlagachse (X-X) des entsprechenden Rotorblattes versetzt ist, wobei ferner das Anschlagelement (36) des beweglichen Anschlages (21) als Aufnahmeteil gestaltet ist, wovon wenigstens eine Innenfläche (42) eine Abstützfläche begrenzt und welches durch die elastischen Rückholmittel (45) durch Verschwenkung im wesentlichen radial nach innen in eine Lage zurückgestellt wird, in welcher es um den konvergierenden Finger (22) greift, so daß bei Drehgeschwindigkeiten, die unter dem gegebenen Schwellwert liegen, jede Abstützfläche (42) des Aufnahmeteils (36) im wesentlichen mit einer entsprechenden Abstützfläche (25) am Umfang des konvergierenden Fingers (22) in Berührung steht, um einen absoluten Schlagbewegungs-Anschlag auf einer und/oder der anderen Seite der Rotationsebene der Rotorblätter zu bilden und einen absoluten Schwenkbewegungs-Anschlag nach hinten und-/oder vorn in bezug auf den Drehsinn des Rotors zu bilden, und daß für eine Drehgeschwindigkeit, die den Schwellwert überschreitet und progressiv anwächst, das Aufnahmeteil (36) radial entgegen den Rückholmitteln nach außen geschwenkt und progressiv von dem konvergierenden Finger (22) fortbewegt wird, so daß zwischen jeder Abstützfläche (42) des Aufnahmeteils (36) und einer entsprechenden Abstützfläche (25, 26) des konvergierenden Fingers (22) ein progressiv anwachsendes Spiel gebildet wird, das progressiv zunehmende Winkelauslenkungen des entsprechenden Rotorblattes in Schlag- und Schwenkbewegung zuläßt, um im Fluge einen freien Anschlag für die Schlag- und Schwenkbewegungen des Rotorblattes zu bilden.

2. Vorrichtung nach Anspruch 1, dadurch gekennzeichnet, daß wenigstens ein Teil der Umfangsfläche des konvergierenden Fingers (22) eine im wesentlichen kegelstumpfförmige Oberfläche (25, 26) ist, die eine durchgehende Abstützzone bildet, und das Aufnahmeteil (36) eine gleichfalls im wesentlichen kegelstumpfförmige Innenoberfläche (42) gegenüber und in Berührung mit der im wesentlichen kegelstumpfförmigen Oberfläche (25, 26) des konvergierenden Fingers (22) in der Stellung des Angreifens des Aufnahmeteils (36) an dem Finger (22) bildet.

3. Vorrichtung nach Anspruch 2, dadurch gekennzeichnet, daß der Scheitelwinkel der im wesentlichen kegelstumpfförmigen Abstützfläche (42) des Aufnahmeteils (36) kleiner als der Scheitelwinkel der im wesentlichen kegelstumpfförmigen Abstützzone (25, 26) des konvergierenden Fingers (22) ist.

4. Vorrichtung nach einem der Ansprüche 1 bis 3, dadurch gekennzeichnet, daß das Aufnahmeteil (36) einen ringförmigen Bereich aufweist, wovon die innere Seitenfläche eine einzige, durchgehende Abstützfläche (42) für den beweglichen Anschlag (21) bildet.

5. Vorrichtung nach Anspruch 4, dadurch gekennzeichnet, daß das Aufnahmeteil (63) einen Boden (64) aufweist, der den ringförmigen Bereich auf der Seite seines radial äußeren Endes in bezug auf die Achse (A) des Rotors bildet und das Aufsitzen des Aufnahmeteils (63) um den konvergierenden Finger (62) herum durch Berührung mit dem radial äußeren Ende (67) des konvergierenden Fingers (62) begrenzt.

6. Vorrichtung nach Anspruch 4, dadurch gekennzeichnet, daß das Aufnahmeteil ein Ring (36) ist, welcher an seinen zwei bezüglich der Achse (A) des Rotors radialen Enden offen ist und um den konvergierenden Finger (22) aufgesetzt ist.

7. Vorrichtung nach einem der Ansprüche 1 bis 6, dadurch gekennzeichnet, daß das Aufnahmeteil (36) eine Masse aufweist, die so bestimmt ist, daß es, sobald die Drehgeschwindigkeit des Rotors den gegebenen Schwellwert überschreitet, zugleich einen radial nach außen entgegen den elastischen Rückholmitteln (45) eingefahrenen Massekörper bildet.

8. Vorrichtung nach einem der Ansprüche 1 bis 7, dadurch gekennzeichnet, daß die Schwenkachse (49) des beweglichen Anschlags (21) in einem Bügel (50a, 50b) eines Halterungsteils (50) angebracht ist, welches an der aus Rotorblatt und Koppelteil (13) bestehenden Baugruppe befestigt ist und vorzugsweise entfernbar in dem Koppelteil (13) des Rotorblattes angebracht ist.

9. Vorrichtung nach einem der Ansprüche 1 bis 8, dadurch gekennzeichnet, daß das Aufnahmeteil (36) von einem Arm (37) getragen wird, der seitlich nach außen an einer Buchse (38) absteht, die verschwenkbar um die Schwenkachse (49) gelagert ist.

10. Vorrichtung nach Anspruch 9, dadurch gekennzeichnet, daß die elastischen Rückholmittel wenigstens eine Torsionsfeder (45) umfassen, welche die Buchse (38) umgibt und einerseits an einem ersten festen Anschlag (53) der aus Rotorblatt und Koppelteil (13) bestehenden Baugruppe sowie andererseits an dem Arm (37) abgestützt ist, um das Aufnahmeteil (36) gegen den konvergierenden Finger (22) zu verschwenken.

11. Vorrichtung nach einem der Ansprüche 9 und 10, dadurch gekennzeichnet, daß der bewegliche Anschlag (21) ferner einen Nocken (43) aufweist, der unter der Wirkung der elastischen Rückholmittel (45) gegen einen zweiten festen Anschlag (54) der aus Rotorblatt und Koppelteil (13) bestehenden Baugruppe angelegt wird, wenn die Drehgeschwindigkeit des Rotors niedriger als der gegebene Schwellwert ist, um die Verschwenkung radial zur Innenseite des beweglichen Anschlages (21) zu begrenzen, in solcher Weise, daß ein geringes Spiel zwischen der Abstützfläche (42) des beweglichen Anschlags (21) und der Abstützzone (25, 26) des festen Anschlags (20) verbleibt, wenn die Anschläge in ihrer Stellung zum Zusammenwirken sind.

12. Vorrichtung nach Anspruch 11, rückbezogen auf Anspruch 8, dadurch gekennzeichnet, daß der zweite feste Anschlag der aus Rotorblatt und Koppelteil (13) bestehenden Baugruppe durch eine Anschlagfläche (54) gebildet ist, die an einer Rippe (55) des Halterungsteils (50) der Anlenkung des beweglichen Anschlags (21) an der aus Rotorblatt und Koppelteil (13) bestehenden Baugruppe begrenzt ist.

13. Vorrichtung nach einem der Ansprüche 10 bis 12, dadurch gekennzeichnet, daß die Buchse (38) des beweglichen Anschlags (21) einen zentralen Teil (39) aufweist, der den Arm (37) trägt, und zwei zylindrische Endstücke (40a, 40b) aufweist, von denen jedes von einem der zwei schraubenförmigen Teile (46a, 46b) einer Torsionsfeder (45) umgeben ist, worauf das Ende jedes schraubenförmigen Teils, welches auf der Seite des anderen schraubenförmigen Teils gelegen ist, als Abstützfahne (47a, 47b) zur Abstützung an dem Arm (37) des beweglichen Anschlags (21) gestaltet ist, während die gegenüberliegenden Enden der zwei schraubenförmigen Teile (46a, 46b) miteinander verbunden sind und einen Bügel (48) bilden, der an dem ersten festen Anschlag (53) der aus Rotorblatt und Koppelteil (13) bestehenden Baugruppe abgestützt ist.

14. Vorrichtung nach einem der Ansprüche 1 bis 13, dadurch gekennzeichnet, daß der konvergierende Finger (22) des festen Anschlags (20) auf einer zentralen und radialen Trägerachse (23) angebracht ist, die fest mit der Nabe (3) verbunden ist und um welche herum der konvergierende Finger (22) mehrere Arbeitsstellungen einnehmen und in jeder dieser Stellungen blockiert werden kann.

15. Vorrichtung nach Anspruch 14, dadurch gekennzeichnet, daß die zentrale Trägerachse (23) des festen Anschlags (20) an dem äußeren radialen Lagerteil (9) koaxial zur Schlagachse (X-X) des entsprechenden Rotorblattes befestigt ist und die Einstellung sowie Blockierung des konvergierenden Fingers (22) um die Trägerachse (23) herum durch eine Vorrichtung zur Drehindexierung um die Schlagachse (X-X) gewährleistet sind.

16. Vorrichtung nach Anspruch 15, dadurch gekennzeichnet, daß die Trägerachse (23) an ihrem äußeren radialen Ende mit Gewinde versehen und an ihrem radial inneren Ende einteilig mit einem koaxialen zylindrischen Umfangsbund (24) verbunden ist, den ein Befestigungsteil (11) für die Befestigung des radial äußeren Lagerteils (9) an der Nabe (3) radial nach außen abstehend aufweist, so daß der konvergierende Finger (22) des festen Anschlags (20) auf der Trägerachse (23) aufgeschoben ist und gehalten wird, indem eine innere Schulter (31) dieses Fingers (22) gegen eine Schulter abgestützt ist, mit welcher die Trägerachse (23) an den zylindrischen Umfangsbund (24) anschließt, und mittels einer Schraubmutter (34), die auf das mit Gewinde versehene Ende der Trägerachse (23) aufgeschraubt ist, wobei die Indexiervorrichtung eine transversale Spindel (35) aufweist, die in dem zylindrischen Umfangsbund (24) angebracht ist und wovon wenigstens ein Ende in bezug auf die seitliche Oberfläche des zylindrischen Ringbundes (24) übersteht und in eine von mehreren Ausnehmungen (33) eingreift, die in einem Teil des Fingers (22) angebracht sind, welcher den zylindrischen Ringbund (24) umgibt, um den Finger (22) in der entsprechenden Drehstellung um die Trägerachse (23) festzulegen.

17. Vorrichtung nach einem der Ansprüche 1 bis 16, dadurch gekennzeichnet, daß der konvergierende Finger (22) des festen Anschlags (20) eine Seele (27) aus starrem Material aufweist, die von einer Elastomerbeschichtung zum Schutz gegen das Anschlagen des beweglichen Anschlags (21) umgeben ist.

18. Angelenkter Rotorkopf eines Drehflügelflugzeugs, vom Typ mit einer Rotornabe (3), die drehfest mit einem Rotormast (2) für die Drehung um eine Drehachse (A) des Rotors verbunden ist und woran jedes Rotorblatt mittels eines gegabelten Koppelteils (13) mit zwei Schenkeln (13a, 13b) sowie durch Halterungs- und Anlenkmittel (7) an der Nabe (3) angeschlossen ist, die ein radial äußeres Lagerteil (9 ), welches an der Nabe (3) befestigt ist, und ein radial inneres Lagerteil (10) umfassen, das an den radial inneren Enden der zwei Schenkel (13a, 13b) des entsprechenden gegabelten Koppelteils (13) befestigt ist, dadurch gekennzeichnet, daß er für jedes Rotorblatt eine Anschlagsvorrichtung (20, 21) nach einem der vorstehenden Ansprüche 1 bis 17 sowie Halterungs- und Anlenkmittel umfaßt, die einen kugelförmigen Anschlag (8) aus Schichtmaterial umfassen, welcher zwischen den zwei entsprechenden Lagerteilen (9, 10) integriert sowie zwischen den zwei Schenkeln (13a, 13b) des entsprechenden gegabelten Koppelteils (13) aufgenommen ist, so daß sein Drehzentrum im wesentlichen auf der Seite des radial äußeren Lagerteils (9) gelegen ist.

19. Rotorkopf nach Anspruch 18, dadurch gekennzeichnet, daß für jedes Rotorblatt das entsprechende radial innere Lagerteil (10) in seinen axial einander gegenüberliegenden Flächen Ausnehmungen (10a, 10b) zum Eintauchen der radialen inneren Enden der Schenkel (13a, 13b) des gegabelten Koppelteils (13) aufweist, an denen das radial innere Lagerteil (10) unmittelbar durch einen einzigen Bolzen (15) angeschlossen ist, dessen Achse (14) im wesentlichen parallel zur Drehachse (A) des Rotors ist.

20. Rotorkopf nach einem der Ansprüche 18 und 19, dadurch gekennzeichnet, daß er für jedes Rotorblatt einen Hebel (61) zur Schlageinstellung aufweist, der einteilig mit dem entsprechenden, radial inneren Lagerteil (10) ausgebildet ist sowie seitlich in bezug auf letzteres übersteht, wobei der Schlag-Einstellhebel (61) einen radialen Bügel (60) aufweist, worin ein Ende eines Schlag-Einstellpleuels (59) angelenkt ist, dessen anderes Ende an einer Schlag-Einstellvorrichtung (56, 57, 58) angelenkt ist.

21. Rotorkopf nach einem der Ansprüche 18 bis 20, dadurch gekennzeichnet, daß das gegabelte Koppelteil (13) jedes Rotorblattes in die Blattwurzel integriert ist.

22. Rotorkopf nach einem der Ansprüche 18 bis 20, dadurch gekennzeichnet, daß das gegabelte Koppelteil jedes Rotorblattes ein im wesentlichen radiales Verbindungselement (70) wie eine Hülse ist, die an ihrem radial inneren Ende zu einem Bügel (72) geformt ist, dessen zwei Schenkel an dem radial inneren Lagerteil (10) der entsprechenden Halterungs- und Anlenkmittel befestigt sind, und die an ihrem radial äußeren Ende zu einem Bügel (69) gestaltet ist, mittels welchem die Befestigung an der entsprechenden Blattwurzel (68) mittels zwei Achsen (71) erfolgt, die im wesentlichen parallel zur Drehachse (A) des Rotors sind, wovon die eine gegebenenfalls entfernbar sein kann, um das Einklappen des Rotorblattes durch Verschwenkung um die andere Achse (71) zu ermöglichen.

23. Rotorkopf nach einem der Ansprüche 18 bis 22, dadurch gekennzeichnet, daß die Nabe zwei radiale Scheiben (73, 74) aufweist, die übereinander und axial im Abstand voneinander angeordnet sind, wobei zwischen ihren Rändern das radial äußere Lagerteil (76) der Halterungs- und Anlenkmittel (77) jedes Rotorblattes nach Art einer Verstrebung angebracht ist und Ausnehmungen (81) durchquert, die in den zwei Schenkeln (79a, 79b) des entsprechenden gegabelten Koppelteils ausgebildet sind.

23

24. Rotorkopf nach einem der Ansprüche 18 bis 22, dadurch gekennzeichnet, daß die Nabe eine radiale Scheibe (3') aufweist, die für jedes Rotorblatt von einer Kammer durchquert wird, worin die entsprechenden Halterungs- und Anlenkmittel (7) wenigstens teilweise aufgenommen sind, deren radial externes Lagerteil gegen den Außenrand der Kammer und gegen den entsprechenden Umfangsteil der Scheibe (3') gehalten wird.

25. Rotorkopf nach einem der Ansprüche 18 bis 22, dadurch gekennzeichnet, daß die Nabe (3) und der Rotormast (2) in Form eines rohrförmigen integrierten Nabenmastes (1) verwirklicht sind, der für jedes Rotorblatt von wenigstens einer Öffnung (6) durchbrochen ist, die von einem (13b) der Schenkel (13a, 13b) des entsprechenden gegabelten Koppelteils (13) durchquert wird und in dessen Innerem die entsprechenden Halterungs- und Anlenkmittel (7) wenigstens teilweise aufgenommen sind sowie mit ihrem radial äußeren Lagerteil (9) in Anlage an einem Teil (4) der Innenfläche des integrierten rohrförmigen Nabenmastes (1) befestigt sind.

26. Rotorkopf nach Anspruch 25, für den hinteren Rotor eines Helikopters, dadurch gekennzeichnet, daß der integrierte rohrförmige Nabenmast (1) im wesentlichen kegelstumpfförmig und dazu bestimmt ist, auf der Seite seiner kleinen Grundfläche (2) drehfest an die Ausgangswelle eines Hilfsgetriebes des Helikopters angeschlossen zu werden, wobei der integrierte rohrförmige Nabenmast (1) eine Steuervorrichtung für den globalen Schlag der Rotorblätter des hinteren Rotors umgibt, die eine Kollektiv-Steuerhülse (56) umfaßt, welche axial verschiebbar im Inneren des rohrförmigen Nabenmastes (1) gelagert ist und wovon der axiale Endbereich (57), der gegen die große Grundfläche des Nabenmastes (1) gerichtet ist, für jedes Rotorblatt einen radialen Bügel (58) trägt, worin ein Ende eines entsprechenden Schlag-Steuerpleuels (59) schwenkbar gelagert ist.

27. Rotorkopf nach einem der Ansprüche 24 bis 26, dadurch gekennzeichnet, daß das radial äußere Lagerteil (9) der entsprechenden Halterungs- und Anlenkmittel (7) für jedes Rotorblatt radial außenseitig als Gabel (9a, 9b) gestaltet ist, die einen entsprechenden Teil (4) der Nabe (3) übergreift, woran das betreffende Lagerteil mittels eines Befestigungsteils (11) befestigt ist, das radial einwärts als Gabel (11a, 11b) ausgebildet ist, die gleichfalls den entsprechenden Teil (4) der Nabe (3) übergreift und den festen Anschlag (20) der Anschlagsvorrichtung (20, 21) trägt.

FIG. 1

FIG. 2

FIG. 3

EP 0 402 236 B1

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17